(19) Europäisches Patentamt
European Patent Office
Office européen des brevets

(11) **EP 4 020 507 B1**

(12) **EUROPÄISCHE PATENTSCHRIFT**

(45) Veröffentlichungstag und Bekanntmachung des Hinweises auf die Patenterteilung:
**25.02.2026 Patentblatt 2026/09**

(21) Anmeldenummer: **21215545.1**

(22) Anmeldetag: **17.12.2021**

(51) Internationale Patentklassifikation (IPC):
*H01F 1/18* (2006.01) *C21D 8/12* (2026.01)

(52) Gemeinsame Patentklassifikation (CPC):
**H01F 1/18; C21D 1/26; C21D 1/76; C21D 1/78; C21D 8/1244; C21D 8/1283**

(54) **WASSERBASIERTE ALKALISCHE ZUSAMMENSETZUNG ZUM BILDEN EINER ISOLATIONSSCHICHT EINES GLÜHSEPARATORS; BESCHICHTETE WEICHMAGNETISCHE LEGIERUNG UND VERFAHREN ZUM HERSTELLEN EINES BESCHICHTETEN WEICHMAGNETISCHEN BANDS**

WATER-BASED ALKALINE COMPOSITION FOR FORMING AN INSULATION LAYER OF AN ANNEALING SEPARATOR; COATED SOFT MAGNETIC ALLOY AND METHOD FOR MANUFACTURING A COATED SOFT MAGNETIC TAPE

COMPOSITION ALCALINE À BASE D'EAU PERMETTANT DE FORMER UNE COUCHE ISOLANTE D'UN SÉPARATEUR DE RECUIT; ALLIAGE MAGNÉTIQUE DOUX ENDUIT ET PROCÉDÉ DE FABRICATION D'UN RUBAN MAGNÉTIQUE DOUX ENDUIT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.12.2020 DE 102020134300**

(43) Veröffentlichungstag der Anmeldung:
**29.06.2022 Patentblatt 2022/26**

(73) Patentinhaber: **Vacuumschmelze GmbH & Co. KG 63450 Hanau (DE)**

(72) Erfinder:
• **VOLBERS, Niklas**
  **63450 Hanau (DE)**

• **TENBRINK, Johannes**
  **63450 Hanau (DE)**
• **BRUNNER, Markus**
  **63450 Hanau (DE)**

(74) Vertreter: **JENSEN & SON 366-368 Old Street London EC1V 9LT (GB)**

(56) Entgegenhaltungen:
EP-A1- 3 000 915    EP-A1- 3 730 286
WO-A1-2020/130643   DE-A1- 102008 039 326
DE-A1- 4 238 150    US-A1- 2022 074 011

**Beschreibung**

Die Erfindung betrifft eine wasserbasierte alkalische Zusammensetzung zum Bilden einer Isolationsschicht eines Glühseparators, beispielsweise auf einer weichmagnetischen Legierung, eine beschichtete weichmagnetische Legierung und ein Verfahren zum Herstellen eines beschichteten weichmagnetischen Bandes.

Zur Optimierung der magnetischen Eigenschaften kristalliner weichmagnetischer Materialien ist es gängige Praxis, diese als Endlosband vorliegenden Werkstoffe mit einer elektrisch isolierenden und als Glühseparator wirksamen Oberflächenbeschichtung zu versehen, bevor daraus durch Wickeln, Stanzen und Stapeln oder durch sonstige Technologien weichmagnetische Kerne und Teile hergestellt werden.

Primäre Aufgabe dieser Beschichtung ist es, Verschweißungen zwischen einzelnen Bandlagen während typischer Wärmebehandlungen bei Temperaturen um oder über 1000 °C sicher zu verhindern. Verschweißungen sind grundsätzlich als elektrische Kontakte zwischen den einzelnen Bandlagen eines weichmagnetischen Teils wirksam und führen damit zwangsläufig zu erhöhten wirbelstrominduzierten Ummagnetisierungsverlusten. Zudem führen Verschweißungen beim Trennen der Bandlagen zu einer mechanischen Beschädigung. Bedingt durch das Erfordernis einer Wärmebehandlung zur Einstellung oder Wiederherstellung guter weichmagnetischer Eigenschaften bei Temperaturen um oder über 1000 °C, in der Regel unter reduzierendem Schutzgas aus reinem Wasserstoff, kommen als Beschichtungsmaterialien mit der Funktion eines Glühseparators praktisch ausschließlich entsprechend temperaturstabile, in der Regel keramische Materialien zum Einsatz.

Was die Art der Beschichtung betrifft, kann man dabei grundsätzlich zwischen Beschichtungen unterscheiden, welche aus einer echten Lösung eines beschichtungsbildenden Materials hergestellt werden und solchen, bei denen partikuläre, gegebenenfalls kolloidal verteilte oder nanopartikuläre Füllstoffe in Kombination mit geeigneten Prozesshilfsstoffen und Bindemitteln auf den zu beschichtenden Bändern appliziert werden.

Ein Beispiel der erstgenannten Kategorie an Beschichtungen aus echten Lösungen ist beispielsweise die in der die EP 1482072 A2 beschriebene Schicht aus Zirkoniumoxyd aus einer alkoholischen Zirkoniumpropylat-Lösung. Bei der Herstellung von weichmagnetischen Bändern aus Siliziumeisen können Beschichtungen auf Basis von Metallphosphaten bzw. Silikaten verwendet werden, wie beispielsweise in der DE 2247269 A1 beschrieben ist. Ein Beispiel für die Verwendung nanopartikulärer Keramikwerkstoffe in Verbindung mit Bindemitteln auf Basis von Metallphosphaten ist in der EP 3396681 A1 beschrieben.

Diese Beschichtungen weisen eine typische Schichtdicke im Bereich um oder deutlich unter 2 μm auf. Deutlich dickere Beschichtungen mit Schichtdicken bis zu etwa 20 μm lassen sich nach der Lehre der DE 10 2008 039 326 A1 durch die Verwendung einer Sol-Gel-Beschichtung mit einer Kombination aus organischen Siloxanen und mit Metallalkoholaten bzw. Metallchelaten erreichen.

EP 3 000 915 A1 offenbart ein Elektrostahlblech, das mit einer isolierenden Beschichtung versehen ist, die eine hohe Korrosionsbeständigkeit und eine hohe Haftung aufweist. Die isolierende Beschichtung enthält Zr und Fe und optional ferner Si in Form von Partikeln.

Es besteht jedoch der Bedarf an alternativen Zusammensetzungen, mit denen eine Beschichtung gebildet werden kann, die sowohl als Glühseparator als auch als elektrische Oberflächenisolation für weichmagnetische Legierungen eingesetzt werden können.

Erfindungsgemäß wird eine wasserbasierte alkalische Zusammensetzung bereitgestellt, die zum Bilden einer Isolationsschicht eines Glühseparators beispielsweise auf einer weichmagnetischen Legierung verwendet werden kann. Die wasserbasierte alkalische Zusammensetzung weist keramische Partikel mit einer Durchschnittspartikelgröße von 10 nm bis 90 nm aufweisen, zumindest eine Polymerdispersion als Bindemittel, wobei die Polymerdispersion eines oder mehrere oder Mischpolymerisate der Gruppe bestehend aus Acrylatpolymeren, Methacrylatpolymeren, Polyvinylacetat, Polystyrol, Polyurethan, Polyvinylalkohol, hydroxylierte Celluloseether, Polyvinylpyrrolidon, und Polyvinylbutyral aufweist, und einen pH-Wert zwischen 8 und 12, bevorzugt zwischen 9 und 11, auf. Die keramischen Partikel weisen einen chemisch oberflächenmodifizierten Böhmit auf.

d.h. eine Zusammensetzung mit keramischen Partikel mit einer Partikelgröße kleiner als 0,5 μm und zumindest einer Polymerdispersion als Bindemittel, wobei die keramischen Partikel Metalloxidhydrate oder Metalloxide oder Metallhydroxide aufweisen und die Polymerdispersion eines oder mehrere oder Mischpolymerisate der Gruppe bestehend aus Acrylatpolymeren, Methacrylatpolymeren, Polyvinylacetat, Polystyrol, Polyurethan, Polyvinylalkohol, hydroxylierte Celluloseether, Polyvinylpyrrolidon, und Polyvinylbutyral, die in Wasser mit einem pH-Wert zwischen 8 und 12, bevorzugt zwischen 9 und 11, enthalten sind, wird bereitgestellt.

Für spezielle Anwendungen, beispielsweise spezielle Wärmebehandlungen an Legierungen der Eisen-Kobalt-Vanadium-Familie zur Erzeugung einer magnetisch besonders vorteilhaften Würfelflächentextur besteht allerdings Bedarf an Beschichtungen, welche das zu beschichtende Band weder vollflächig bedecken noch während bzw. nach der Wärmebehandlung bei Temperaturen, bei denen die gewünschte Würfelflächentextur erzeugt werden soll, so fest an der Bandoberfläche haften, dass sie nur noch durch chemische oder abrasive Methoden entfernt werden können. Es hat sich gezeigt, dass ohne diese beiden Bedingungen die Textureinstellung durch die Beschichtung in einem derartigen Ausmaß gestört wird, dass es nicht mehr gelingt, in einem nennenswerten Volumenanteil des weichmagnetischen Materials die gewünschte Würfelflächentextur {001}<uvw> mit einer Ausrichtung der magnetisch leichten Achse <001> parallel zur Blechoberfläche zu erzeugen. Insbesondere wird bei einer vollflächigen Beschichtung der Anteil der magnetisch ungünstigen {111}<uvw>-Orientierung zu hoch. Es ist das Ziel, den Anteil dieser ungünstigen {111} <uvw>-Orientierung unter 13% zu halten, bevorzugt unter 6%, um hohe Induktionswerte zu erreichen, wobei Körner mit einer Verkippung von bis zu +/- 10° oder noch besser bis zu +/- 15° gegenüber der nominellen Kristallorientierung der {111} Ebenen eingeschlossen werden.

Mit der erfindungsgemäßen wasserbasierten alkalischen Zusammensetzung kann eine Beschichtung auf einem Substrat wie einem Band aus einer weichmagnetischen Legierung auf Eisen-Kobalt-Basis gebildet werden, welche auf dem beschichteten Band bei Raumtemperatur sehr gut haftet und die üblichen formgebenden Verfahrensschritte wie beispielsweise Schneiden, Stanzen oder Biegen ohne nennenswerte Beeinträchtigung erlaubt. Ferner verliert sich beim Überschreiten einer bestimmten Temperaturschwelle während der anschließenden Wärmebehandlung aber die Haftung zur Bandoberfläche insoweit, dass sie nur leicht angesintert ist, aber noch leicht von der Bandoberfläche entfernt werden kann, z.B. durch Reiben mit dem Finger.

Weiterhin enthält die Beschichtung keine bei der mechanischen Bearbeitung verschleißfördernden Komponenten wie beispielsweise Keramikpartikel mit Partikelgrößen > 1 $\mu$m. Um eine sichere Wärmebehandlung ohne Verschweißungen gestapelter oder gewickelter Einzellagen selbst bei Glühungen unter mechanischer Belastung und beim Vorhandensein von Bandfehlern wie beispielsweise Stanz- oder Schneidgraten zu erlauben, kann die Beschichtung in einem Dickenbereich zwischen ca. 2 und 15 $\mu$m je Bandseite auf das zu beschichtende Material aufgetragen werden, wobei gleichzeitig sicherzustellen ist, dass die Beschichtung in der Art strukturiert werden kann, dass nur maximal 20% bis 80 % der Bandoberfläche mit Beschichtung bedeckt sind.

Ferner ist die wasserbasierte alkalische Zusammensetzung so formuliert, dass es während des Auftragens der Beschichtung, bei deren Trocknung und natürlich auch im getrockneten Zustand an den im Wesentlichen aus Eisen bestehenden Legierungen zu keinerlei Korrosion des beschichteten Magnetmaterials kommt.

Um diese Anforderungen zu bedienen, wird zum Bilden einer geeigneten Beschichtung eine wässrig alkalische Dispersion eines nanopartikulären keramischen Materials (Metalloxide oder Metallhydroxide) in Kombination mit Polymerdispersionen, wasserlöslichen Polymeren oder einer Kombination aus diesen beiden Substanzklassen als temporäres Bindemittel bzw. als rheologisch wirksame Komponente bereitgestellt.

Weiterhin kann die Beschichtungsrezeptur Benetzungs- und Verlaufsadditive enthalten, welche für eine gute Substratbenetzung und damit letztendlich für eine gute Haftung der getrockneten Beschichtung sorgen. Die hier als temporäre Bindemittel vorgeschlagenen Dispersionen auf Basis von Acrylatpolymeren stellen nur eine aus einer Vielzahl möglicher Varianten der dafür einsetzbaren chemischen Verbindungen dar. Grundsätzlich ebenfalls einsetzbar wären beispielsweise auch Dispersionen auf Basis von Polyvinylacetat, Polystyrol, Polyurethan oder auch direkt wasserlösliche Polymere wie beispielsweise Polyvinylalkohol, hydroxylierte Celluloseether, Polyvinylpyrrolidon oder auch Polyvinylbutyral. Vorzugsweise wird eine hinreichende Verträglichkeit der Bindemittel- und Verdickungsmittel mit den restlichen Rezepturbestandteilen und hinreichend gute thermische Abbaubarkeit des Polymers gewährleistet, so dass das erfindungsgemäß beschichtete Material direkt einer Wärmebehandlung unter reduzierendem Schutzgas, insbesondere hochreinem Wasserstoff, zugeführt werden kann, ohne dass zuvor eine Wärmebehandlung zur gezielten Entfernung der organischen Komponenten der Bandbeschichtung erforderlich wird.

Wenn die zu beschichtenden weichmagnetischen Materialien zu mindestens 65 % aus Eisen bestehen und die weiterhin enthaltenen, wesentlichen Legierungselemente Kobalt und Vanadium nicht geeignet sind, auf der Materialoberfläche korrosionsschützende Passivschichten zu erzeugen, wird bei Wasser als Prozessmedium durch geeignete Wahl des pH-Wertes Oberflächenkorrosion soweit technisch möglich verhindert. Dies geschieht durch Wahl eines pH-Wertes im Bereich zwischen ca. 8 und 12, vorzugsweise zwischen 9 und 11, da in diesem Bereich im Wesentlichen aus Eisen bestehende Legierungen weitestgehend gegen Korrosion geschützt sind.

Während dem eigentlichen Beschichtungsprozess, d.h. während dem Auftragen und Trocknen der wässrigen Beschichtungslösung, lässt sich dieser vorteilhafte Bereich des pH - Wertes in einfacher Weise durch Zugabe einer wässrigen Ammoniaklösung einhalten. Nach der Trocknung der Beschichtung und der damit zwangsweise verbundenen Entfernung der Ammoniaklösung aus der Beschichtung, kann ein permanenter Korrosionsschutz durch Zugabe eines Additivs erreicht werden welches während der Trocknung der beschichteten Bänder hinreichend schwerflüchtig ist und im getrockneten Zustand der Beschichtung permanent hinreichend hohe pH - Werte sicherstellt. Zu diesem Zweck besonders vorteilhaft ist der Einsatz wasserlöslicher, und mit den restlichen Komponenten der Rezeptur verträglicher Alkanolamine, wie beispielsweise 2-Amino-2-Ethyl-1,3-Propandiol oder 2-Amino-2-Methyl-1,3-Propandiol.

Bei der Auswahl der als Glühseparator wirksamen keramischen Verbindung werden mehrere Aspekte berücksichtigt. Neben der selbstverständlichen Forderung nach einer hinreichenden Temperaturbeständigkeit, der chemischen Beständigkeit im alkalischen Milieu, einer Partikelgröße im Bereich 0,02 - 0,5$\mu$m und einer ausreichenden Stabilität damit hergestellter kolloidal disperser Sole ist es weiterhin von großem Vorteil, wenn die Viskosität daraus hergestellter Sole eine starke Abhängigkeit von der Konzentration der dispergierten Partikel zeigt. Eine solche Abhängigkeit führt dazu, dass es während der Trocknung der applizierten Nassschicht zu einem sehr starken Viskositätsanstieg kommt und so ein unkontrolliertes Verlaufen einer strukturiert aufgebrachten Beschichtung praktisch vollständig vermieden werden kann.

Vor diesem Hintergrund hat sich die Verwendung von im Alkalischen in nanopartikulärer Form dispergierbarer Materialien auf Basis chemisch oberflächenmodifizierter Böhmite besonders bewährt. Diese zeigen, im Gegensatz zu den ansonsten für solche Anwendungen oft eingesetzten Produkten auf Basis kolloidaler Kieselsäuren, eine sehr starke Abhängigkeit der Dispersionsviskosität von der Konzentration der dispergierten Partikel.

Als temporäre Bindemittel und als rheologisch wirksames Additiv werden wässrige Dispersionen von Polymerisaten auf Basis von Methacrylsäureestern ggf. in Kombination mit Acrylsäureestern eingesetzt. Mit diesen Dispersionen lassen sich als Bindemittel Kunststofffilme realisieren, welche über eine hinreichende Härte, Haftung und Abriebbeständigkeit verfügen, die eine problemlose Verwendung bei den üblichen mechanischen Bearbeitungsschritten wie beispielsweise Stanzen oder Schneiden erlauben. Ein weiterer Vorteil dieser Polymere ist der vergleichsweise einfache und rückstandsarme thermische Abbau durch Depolymerisation bei Temperaturen ab ca. 400 - 450 °C. Dadurch gelingt es, die organischen Bestandteile der Beschichtung direkt unter Wasserstoff weitestgehend rückstandsfrei zu entfernen und so eine Aufkohlung so beschichteter Legierungsbänder, welche wiederum mit einer Beeinträchtigung der erzielbaren magnetischen Eigenschaften verbunden wäre, zu vermeiden.

Für eine Unterstützung der Benetzung der zu beschichtenden Bandoberfläche und damit letztlich zum Erzielen einer gut haftenden Beschichtung werden im Alkalischen stabile, oberflächenaktive Verlaufsmittel auf Basis von Silikonpolyether-Polymeren verwendet. Dieses Additiv stellt sicher, dass leichte Verunreinigungen der zu beschichtenden Bandoberfläche z.B. durch Spuren von Walzölrückständen nicht zu Benetzungsstörungen beim Auftragen des wasserbasierten Beschichtungsmittels führen.

In manchen Ausführungsbeispielen weist die Polymerdispersion Methacrylsäureester und optional Acrylsäureester auf.

In manchen Ausführungsbeispielen liegt die Durchschnittspartikelgröße der keramischen Partikel zwischen 10 nm bis 300 nm, vorzugsweise 20 nm bis 150 nm, vorzugsweise 10 nm bis 90 nm. Eine kleinere Durchschnittspartikelgröße hat den Vorteil, dass ein Muster aus beschichteten Bereichen mit genauer definierten Maßen gebildet werden kann. Ferner kann die Dicke der beschichteten Bereiche genauer kontrolliert werden.

In manchen Ausführungsbeispielen weist die Zusammensetzung ferner zumindest ein rheologisches Additiv auf.

Das rheologische Additiv kann ein Carboxylgruppen-haltiges, im alkalischen wasserlösliches, Polymer auf Basis von Acryl- und Methacrylsäureestern aufweisen.

In manchen Ausführungsbeispielen enthält das rheologische Additiv einen hydroxilierten Celluloseether.

In manchen Ausführungsbeispielen ist das rheologische Additiv in einer Menge in der Zusammensetzung enthalten, sodass die Zusammensetzung eine Viskosität größer als 100 Pa * s aufweist.

In manchen Ausführungsbeispielen weist das Bindemittel eine Temperaturbeständigkeit von weniger als 500°C auf.

In manchen Ausführungsbeispielen, die ein rheologische Additiv enthalten, weist das rheologische Additiv eine Temperaturbeständigkeit von weniger als 500°C auf.

In manchen Ausführungsbeispielen weist die Zusammensetzung ferner zumindest ein Korrosionsschutzmittel auf. In manchen Ausführungsbeispielen ist das Korrosionsschutzmittel ein wasserlösliches Alkanolamin, wie beispielsweise 2-Amino-2-Ethyl-1,3-Propandiol oder 2-Amino-2-Methyl-1,3-Propandiol.

Erfindungsgemäß wird eine beschichtete weichmagnetische Legierung bereitgestellt, wobei die Beschichtung eine maximale Auftragsdicke in den mit der Beschichtung versehenen Oberflächenbereichen von 1μm bis 15μm, vorzugsweise 1,5μm bis 8μm, vorzugsweise 1 μm bis 6μm und eine Zusammensetzung nach einem der vorherstehenden Ausführungsbeispiele aufweist. Diese beschichtete weichmagnetische Legierung ist in dem Zustand vor einer Wärmebehandlung.

In manchen Ausführungsbeispielen hat die weichmagnetische Legierung die Gestalt eines Bandes.

In manchen Ausführungsbeispielen ist die weichmagnetische Legierung vollständig mit der Beschichtung abgedeckt.

In manchen Ausführungsbeispielen liegen 20% bis 80% der Gesamtoberfläche der weichmagnetischen Legierung frei von der Beschichtung. Dieses Ausführungsbeispiel kann bei einer weichmagnetischen Legierung auf Eisen-Kobalt-Basis verwendet werden, um die Bildung einer Würfelflächentextur {001}<uvw> zu vereinfachen bzw. zu ermöglichen.

In manchen Ausführungsbeispielen ist die weichmagnetische Legierung planar und weist beispielsweise die Form eines Bands oder eines Bleches mit einer ersten Oberfläche und einer zweiten gegenüberliegenden Oberfläche auf, wobei zumindest zwischen 20% und 80%, vorzugsweise zwischen 30% bis 70%, besonders bevorzugt zwischen 50% bis 70% der ersten Oberfläche und zwischen 20% und 80%, vorzugsweise zwischen 30% bis 70%, besonders bevorzugt zwischen 50% und 70% der zweiten Oberfläche frei von der Beschichtung ist.

In manchen Ausführungsbeispielen ist die Beschichtung in Form eines Musters auf der weichmagnetischen Legierung angeordnet.

Das Muster kann eine regelmäßige Anordnung von beschichteten und unbeschichteten freiliegenden Bereichen aufwiesen. In manchen Ausführungsbeispielen weist das Muster die Gestalt von Streifen oder Punkten oder einem Netz auf, wobei die beschichteten Bereiche die Gestalt von Streifen, Punkten oder einem Gitter aufweisen.

In manchen Ausführungsbeispielen ist die maximale Breite der beschichteten Bereiche weniger als 2mm, bevorzugt weniger als 1,2mm, besonders bevorzugt weniger als 0,8mm. Es wurde gefunden, dass diese maximale Breite der beschichteten Bereiche die Bildung der Würfelflächentextur bevorzugt.

Typischerweise hat die zu beschichtende weichmagnetische Legierung die Form eines Bandes mit zwei gegenüberliegenden Seiten. In manchen Ausführungsbeispielen ist die Beschichtung einseitig oder auf beiden Seiten angeordnet.

In manchen Ausführungsbeispielen ist zwischen 80% bis 20%, vorzugsweise zwischen 70% bis 30% der Gesamtoberfläche der weichmagnetischen Legierung frei von der Beschichtung.

In manchen Ausführungsbeispielen weist die weichmagnetische Legierung eine der Legierungen der Gruppe bestehend aus Eisenlegierungen mit mindestens 99,5% Fe und erschmelzungsbedingten Verunreinigungen, FeSi-Legierungen mit bis zu 5 Gew.-% Si, NiFe-Legierungen mit 30 bis 82 Gew.-% Ni, und FeCo-Legierungen mit einem Co-Gehalt zwischen 4 Gew.-% und 50 Gew.-% auf.

In einem Ausführungsbeispiel weist die weichmagnetische Legierung eine Zusammensetzung auf, die im Wesentlichen aus

$$5 \text{ Gew.-\%} \quad \leq Co \quad \leq 25 \text{ Gew.-\%}$$

$$0,3 \text{ Gew.-\%} \quad \leq V \quad \leq 5,0 \text{ Gew.-\%}$$

$$0 \text{ Gew.-\%} \quad \leq Cr \quad \leq 3,0 \text{ Gew.-\%}$$

$$0 \text{ Gew.-\%} \quad \leq Si \quad \leq 3,0 \text{ Gew.-\%}$$

$$0 \text{ Gew.-\%} \quad \leq Mn \quad \leq 3,0 \text{ Gew.-\%}$$

$$0 \text{ Gew.-\%} \quad \leq Al \quad \leq 3,0 \text{ Gew.-\%}$$

$$0 \text{ Gew.-\%} \quad \leq Ta \quad \leq 0,5 \text{ Gew.-\%}$$

$$0 \text{ Gew.-\%} \quad \leq Ni \quad \leq 0,5 \text{ Gew.-\%}$$

$$0 \text{ Gew.-\%} \quad \leq Mo \quad \leq 0,5 \text{ Gew.-\%}$$

$$0 \text{ Gew.-\%} \quad \leq Cu \quad \leq 0,2 \text{ Gew.-\%}$$

$$0 \text{ Gew.-\%} \quad \leq Nb \quad \leq 0,25 \text{ Gew.-\%}$$

$$0 \text{ Gew.-\%} \quad \leq Ti \quad \leq 0,05 \text{ Gew.-\%}$$

$$0 \text{ Gew.-\%} \quad \leq Ce \quad \leq 0,05 \text{ Gew.-\%}$$

$$0 \text{ Gew.-\%} \quad \leq Ca \quad \leq 0,05 \text{ Gew.-\%}$$

$$0 \text{ Gew.-}\% \quad \leq Mg \quad \leq 0,05 \text{ Gew.-}\%$$

$$0 \text{ Gew.-}\% \quad \leq C \quad \leq 0,02 \text{ Gew.-}\%$$

$$0 \text{ Gew.-}\% \quad \leq Zr \quad \leq 0,1 \text{ Gew.-}\%$$

$$0 \text{ Gew.-}\% \quad \leq O \quad \leq 0,025 \text{ Gew.-}\%$$

$$0 \text{ Gew.-}\% \quad \leq S \quad \leq 0,015 \text{ Gew.-}\%$$

Rest Eisen, wobei $Cr+Si+Al+Mn \leq 3,0$ Gew.-%, und bis zu 0,2 Gew.-% an anderen schmelzbedingten Verunreinigungen, besteht.

Erfindungsgemäß wird ferner ein Verfahren zum Herstellen einer beschichteten weichmagnetischen Legierung bereitgestellt. Das Verfahren weist Folgendes auf. Eine weichmagnetische Legierung wird bereitgestellt und mit einer wasserbasierten alkalischen Zusammensetzung nach einem der oben beschriebenen Ausführungsbeispiele beschichtet. Die beschichtete weichmagnetische Legierung wird wärmebehandelt, wobei die Beschichtung eine Isolationsschicht aus keramischen Partikeln bildet, die als Glühseparator fungiert.

In manchen Ausführungsbeispielen wird die weichmagnetische Legierung vollständig mit der Beschichtung abgedeckt.

In manchen Ausführungsbeispielen wird die Beschichtung mittels Tauchens oder Sprühens auf die weichmagnetische Legierung aufgebracht.

In manchen Ausführungsbeispielen wird die weichmagnetische Legierung durch Aufbringen einer Struktur beschichtet, wobei Teile der Oberfläche der weichmagnetischen Legierung frei von der Struktur sind.

In manchen Ausführungsbeispielen wird die Struktur durch ein Muster aus Streifen oder Punkten oder einem Netz bzw. einem Gitter gebildet.

In manchen Ausführungsbeispielen wird die Beschichtung bzw. Struktur bzw. Muster mithilfe von Profilwalzen auf die weichmagnetische Legierung aufgebracht.

In manchen Ausführungsbeispielen ist die maximale Breite der beschichteten Bereiche weniger als 2mm, bevorzugt weniger als 1,2mm, besonders bevorzugt weniger als 0,8mm.

In manchen Ausführungsbeispielen bleiben vor und nach der Wärmebehandlung zwischen 20% bis 80%, vorzugsweise zwischen 30% bis 70% der Gesamtoberfläche der weichmagnetischen Legierung frei von der Beschichtung.

In manchen Ausführungsbeispielen weist die weichmagnetische Legierung die Form eines Bleches oder eines Bandes mit einer ersten Oberfläche und einer zweiten gegenüberliegenden Oberfläche auf, wobei zumindest zwischen 20% und 80%, vorzugsweise zwischen 30% bis 70%, besonders bevorzugt zwischen 50% bis 70% der ersten Oberfläche und zwischen 20% und 80%, vorzugsweise zwischen 30% bis 70%, besonders bevorzugt zwischen 50% und 70% der zweiten Oberfläche frei von der keramikbildenden Schicht ist.

In manchen Ausführungsbeispielen weist nach der Wärmebehandlung die Beschichtung eine Dicke der mit der Beschichtung versehenen Bereiche von $0,5\mu m$ bis $15\mu m$, vorzugsweise $1,5\,\mu m$ bis $8\mu m$, vorzugsweise $1\,\mu m$ bis $6\mu m$ auf. Diese Dicke beschreibt die Dicke der Beschichtung auf einer Seite der weichmagnetischen Legierung.

In manchen Ausführungsbeispielen weist die weichmagnetische Legierung die Gestalt eines Bands auf, so dass die beschichtete weichmagnetische Legierung die Form eines beschichteten Bandes aufweist. Mehrere einzelne beschichtete Bleche werden dann aus dem beschichteten Band mittels Schneiden, Stanzen oder Laserschneiden geformt.

In manchen Ausführungsbeispielen werden die Bleche zu einem Stapel gestapelt und der Stapel wird wärmebehandelt.

In manchen Ausführungsbeispielen werden die Bleche zu einem Blechpaket verbunden und das Blechpaket wird wärmebehandelt.

In manchen Ausführungsbeispielen werden die Bleche mittels Schweißen, Laserschweißen oder Stanzpaketieren zu einem Blechpaket verbunden.

In manchen Ausführungsbeispielen wird die weichmagnetische Legierung bei einer Temperatur oberhalb 650°C wärmebehandelt.

In manchen Ausführungsbeispielen weist die weichmagnetische Legierung eine der Legierungen der Gruppe bestehend aus Eisenlegierungen mit mindestens 99,5 Gew.-% Fe und erschmelzungsbedingten Verunreinigungen, FeSi-Legierungen mit bis zu 5 Gew.-% Si, NiFe-Legierungen mit 30 bis 82 Gew.-% Ni, und FeCo-Legierungen mit einem Co-Gehalt zwischen 4 Gew.-% und 50 Gew.-% auf.

In einem Ausführungsbeispiel weist die weichmagnetische Legierung eine Zusammensetzung auf, die im Wesentlichen aus

| | | |
|---|---|---|
| 5 Gew.-% | ≤ Co | ≤ 25 Gew.-% |
| 0,3 Gew.-% | ≤ V | ≤ 5,0 Gew.-% |
| 0 Gew.-% | ≤ Cr | ≤ 3,0 Gew.-% |
| 0 Gew.-% | ≤ Si | ≤ 3,0 Gew.-% |
| 0 Gew.-% | ≤ Mn | ≤ 3,0 Gew.-% |
| 0 Gew.-% | ≤ Al | ≤ 3,0 Gew.-% |
| 0 Gew.-% | ≤ Ta | ≤ 0,5 Gew.-% |
| 0 Gew.-% | ≤ Ni | ≤ 0,5 Gew.-% |
| 0 Gew.-% | ≤ Mo | ≤ 0,5 Gew.-% |
| 0 Gew.-% | ≤ Cu | ≤ 0,2 Gew.-% |
| 0 Gew.-% | ≤ Nb | ≤ 0,25 Gew.-% |
| 0 Gew.-% | ≤ Ti | ≤ 0,05 Gew.-% |
| 0 Gew.-% | ≤ Ce | ≤ 0,05 Gew.-% |
| 0 Gew.-% | ≤ Ca | ≤ 0,05 Gew.-% |
| 0 Gew.-% | ≤ Mg | ≤ 0,05 Gew.-% |
| 0 Gew.-% | ≤ C | ≤ 0,02 Gew.-% |
| 0 Gew.-% | ≤ Zr | ≤ 0,1 Gew.-% |
| 0 Gew.-% | ≤ O | ≤ 0,025 Gew.-% |
| 0 Gew.-% | ≤ S | ≤ 0,015 Gew.-% |

Rest Eisen, wobei Cr+Si+Al+Mn ≤ 3,0 Gew.-%, und bis zu 0,2 Gew.-% an anderen schmelzbedingten Verunreinigungen, besteht.

Diese weichmagnetische Legierung weist einen Phasenübergang von einem BCC-Phasengebiet in ein BCC/FCC-Mischgebiet zu einem FCC-Phasengebiet auf, wobei bei aufsteigender Temperatur der Phasenübergang

7

zwischen dem BCC-Phasengebiet und dem BCC/FCC-Mischgebiet bei einer ersten Übergangstemperatur $T_{\alpha/\alpha+\gamma}$ und bei weiter ansteigender Temperatur der Übergang zwischen dem BCC/FCC-Mischgebiet und dem FCC-Phasengebiet bei einer zweiten Übergangstemperatur $T_{\alpha+\gamma/\gamma}$ stattfindet, wobei $T_{\alpha+\gamma/\gamma} > T_{\alpha/\alpha+\gamma}$.

In manchen Ausführungsbeispielen beträgt die Differenz $T_{\alpha+\gamma/\gamma} - T_{\alpha/\alpha+\gamma}$ geringer als 45K ist, vorzugsweise geringer als 25K.

Diese weichmagnetische Legierung wird vorzugsweise nur teilweise beschichtet, sodass zwischen 20% bis 80%, vorzugsweise zwischen 30% bis 70% der Gesamtoberfläche der weichmagnetischen Legierung frei von der Beschichtung sind. Im Falle der Gestalt eines Bandes mit zwei gegenüberliegenden Hauptseiten ist die Gesamtoberfläche aus den Oberflächen der zwei Hauptseiten gebildet.

In diesem Ausführungsbeispiel wird die folgende Wärmebehandlung durchgeführt, um den Anteil der Würfelflächentextur {001}<uvw> mit einer Ausrichtung der magnetisch leichten Achse <001> parallel zur Blechoberfläche zu erhöhen und den Anteil der magnetisch ungünstigen {111}<uvw>-Orientierung unter 13% zu halten, bevorzugt unter 6%, um hohe Induktionswerte zu erreichen, wobei Körner mit einer Verkippung von bis zu +/- 10° oder noch besser bis zu +/- 15° gegenüber der nominellen Kristallorientierung der {111} Ebenen eingeschlossen werden.

In einem Ausführungsbeispiel wird die beschichtete weichmagnetische Legierung aufgeheizt und danach in einer ersten Stufe mit einer Gesamtzeitdauer $t_1$, wärmebehandelt, wobei in der ersten Stufe die beschichtete weichmagnetische Legierung bei einer Temperatur in einem Temperaturbereich zwischen $T_{\alpha+\gamma/\gamma}$ und $T_1$ wärmebehandelt wird und danach bis Raumtemperatur abgekühlt.

In einem alternativen Ausführungsbeispiel wird die beschichtete weichmagnetische Legierung aufgeheizt und danach in einer ersten Stufe mit einer Gesamtzeitdauer $t_1$, wärmebehandelt, wobei in der ersten Stufe die beschichtete weichmagnetische Legierung bei einer Temperatur in einem Temperaturbereich zwischen $T_{\alpha+\gamma/\gamma}$ und $T_1$ wärmebehandelt wird und danach auf eine Temperatur $T_2$, abgekühlt und danach in einer zweiten Stufe bei der Temperatur $T_2$ für eine Zeitdauer $t_2$, wärmebehandelt und danach auf Raumtemperatur abgekühlt.

Bei beiden Ausführungsbeispielen wird die Wärmebehandlung zumindest zeitweise in einer wasserstoffhaltigen Atmosphäre durchgeführt, währenddessen die freiliegenden Teile der Oberfläche der teilweise beschichteten weichmagnetischen Legierung in direktem Kontakt mit der wasserstoffhaltigen Atmosphäre stehen, $T_1 > T_2$ ist, $T_1$ oberhalb $T_{\alpha+\gamma/\gamma}$ und $T_2$ unterhalb $T_{\alpha/\alpha+\gamma}$ liegt.

In manchen Ausführungsbeispielen weist nach der Wärmebehandlung die Legierung einen Flächenanteil an einer {111}<uvw>-Textur auf, der maximal 13%, vorzugsweise maximal 6%, beträgt , wobei Körner mit einer Verkippung von bis zu +/- 10° oder noch besser bis zu +/- 15° gegenüber der nominellen Kristallorientierung der {111} Ebenen eingeschlossen werden.

In manchen Ausführungsbeispielen weist nach der Wärmebehandlung die Legierung einen Flächenanteil an einer {100}<uvw>-Würfelflächentextur auf, der mindestens 30%, vorzugsweise mindestens 50% beträgt, wobei Körner mit einer Verkippung von bis zu +/- 15° oder noch besser bis zu +/- 10° gegenüber der nominellen Kristallorientierung der {100} Ebenen eingeschlossen werden.

In manchen Ausführungsbeispielen weist die weichmagnetische Legierung die Gestalt mehrerer gestapelter Bleche auf, die mit einem zusätzlichen Gewicht beschwert und mit dem Gewicht der Wärmebehandlung unterzogen werden.

In manchen Ausführungsbeispielen wird die weichmagnetische Legierung einer weiteren magnetischen Schlussglühung unterzogen, sodass sie nach der Abkühlung von $T_1$ auf Raumtemperatur von Raumtemperatur auf $T_2$ aufgeheizt wird.

In manchen Ausführungsbeispielen weist nach dem Wärmebehandeln die weichmagnetische Legierung:

eine maximale Permeabilität $\mu_{max} \geq 6.000$ und/oder einen elektrischen Widerstand $\rho \geq 0,25\ \mu\Omega m$, Hystereseverluste $P_{Hys} \leq 0,07$ J/kg bei einer Amplitude von 1,5 T und/oder eine Koerzitivfeldstärke $H_c$ von $\leq 0,8$ A/cm und/oder Induktion $B_{20} \geq 1,70$ T bei 20 A/cm auf oder
eine maximale Permeabilität $\mu_{max} \geq 10.000$ und/oder einen elektrischen Widerstand $\rho \geq 0,25\ \mu\Omega m$ und/oder Hystereseverluste $P_{Hys} \leq 0,06$ J/kg bei einer Amplitude von 1,5 T und/oder eine Koerzitivfeldstärke $H_c$ von $\leq 0,5$ A/cm und Induktion $B_{20} \geq 1,74$ T bei 20 A/cm auf.

Beispiele und Ausführungsbeispiele werden nun anhand der Zeichnungen näher erläutert.

Fig. 1     zeigt eine REM-Aufnahme einer Probe mit einer strukturierten Beschichtung.

Fig. 2     zeigt EDX Element-Maps einer Probe mit einer strukturierten Beschichtung.

Fig. 3     zeigt schematischen Darstellungen verschiedener Oberflächenmuster, mit der eine weichmagnetische Legierung teilweise beschichtet werden kann.

Fig. 4    zeigt einen Graph der magnetischen Induktion B20 ( B20 = B(20 A/cm)) nach einer Schlussglühung in Abhängigkeit vom Al-Flächenanteil $A_{Al}$.

Fig. 5    zeigt einen Graph der Koerzitivfeldstärke $H_c$ nach einer Schlussglühung in Abhängigkeit vom Al-Flächenanteil $A_{Al}$.

Fig. 6    zeigt eine EDX-Linienanalyse über mehre Streifen einer Beschichtung.

In manchen Ausführungsbeispielen wird die Zusammensetzung bei einem Band oder Teil aus der kristallinen weichmagnetischen Fe-Co-V Legierung bestehend aus 17,25% Co, 1,49% V, 0,23% Si, 0,1% Mn, die unter dem Handelsnamen VACOFLUX X1 von Vacuumschmelze GmbH & Co. KG kommerziell erhältlich ist, verwendet, wobei die Legierung zur Einstellung der magnetischen Eigenschaften einer Schlussglühung unterzogen werden soll. Die Wärmebehandlung hat zum Ziel, dass das kaltverformte Gefüge rekristallisiert und anschließend ein Kornwachstum stattfindet, um die magnetischen Eigenschaften zu verbessern. Die Beschichtung kann jedoch bei anderen weichmagnetischen Legierungen verwendet werden.

Besonders vorteilhaft ist es, wenn man durch eine solche Wärmebehandlung auch eine magnetisch vorteilhafte Vorzugsrichtung der Kristallite einstellt. Bei der genannten Zusammensetzung ist es möglich, durch eine Glühung im γ-Gebiet und anschließender tertiärer Rekristallisation beim Abkühlen eine Würfelflächentextur {001}<uvw> einzustellen. In einem Fe-basierten Legierungssystem mit positiver Kristallanisotropiekonstante $K_1$ liegt damit die magnetisch leichte Würfelkante <001> in der Blechebene und die magnetisch schwere Raumdiagonale <111> ist aus der Blechebene gedreht. Somit ergibt sich eine erhöhte Induktion B(H), insbesondere im Bereich mittlerer Feldstärken H zwischen 3 und 100 A/cm, was z.B. elektrische Motoren mit einem höheren Drehmoment oder einer kompakteren Bauform ermöglicht.

In Tabellen 1 und 2 sind die magnetischen Kennwerte verschiedener Ausführungsbeispiele dargestellt, die alle der gleichen Wärmebehandlung unterzogen wurden, sich aber hinsichtlich der verwendeten Beschichtung unterscheiden.

Die Kennwerte B3, B20 und B100 entsprechen der Induktion bei 3 A/cm, 20 A/cm und 100 A/cm. Zusammen mit der Maximalpermeabilität $\mu_{max}$ charakterisieren sie die statische Neukurve. Für Anwendungen in elektrischen Maschinen sollten diese Kennwerte möglichst hoch liegen. Die Remanenz $B_r$ entspricht der remanenten Induktion des Materials nach einer Aufmagnetisierung von $H_{max}$ = 160 A/cm und ist ein Maß für die Rechteckigkeit der Hystereseschleife. Die Koerzitivfeldstärke $H_c$ sollte wie bei jedem weichmagnetischen Werkstoff möglichst gering sein, u.a. um die Ummagnetisierungsverluste gering zu halten.

Die ebenfalls in den Tabellen 1 und 2 angegebene Bewertung der weichmagnetischen Eigenschaften richtet sich nach der Magnetik, die bei der genannten Zusammensetzung zu erwarten ist. Eine "ausreichende" Magnetik liegt vor, wenn die Maximalpermeabilität mindestens 6.000 beträgt, der Induktionswert B20 aber unter 1,70 T liegt. In diesem Fall liegt ein signifikanter Anteil an (111)-Orientierung vor. Eine "gute" Magnetik liegt vor, wenn der Induktionswert B20 zwischen 1,70 T und 1,74 T liegt. Die erhöhte Induktion ist bei diesem Werkstoff durch das Vorliegen einer Würfelflächentextur {001}<uvw> bzw. durch Unterdrückung der magnetischen ungünstigen Vorzugsrichtung <111> parallel zur Blechebene zu erreichen. Eine "sehr gute" Magnetik liegt vor, wenn die Induktion B20 über 1,74 T liegt, was auf sehr hohe Anteile an Würfelflächentextur zurückzuführen ist.

Schließlich ist in den Tabellen 1 und 2 noch eine Bewertung der Blechqualität nach der Glühung angegeben. Eine ausreichende Trennung der Lagen ist das notwendige Kriterium für eine Fertigung von Teilen. Eine "sehr gute" Blechqualität liegt vor, wenn die Bleche nach der Glühung ohne zusätzlichen Aufwand voneinander getrennt werden können, keine Verschweißungen vorliegen und die Blechoberfläche keine Eindrücke aufweist. Dabei ist es auch möglich, dass an einzelnen Blechen noch Anhaftungen vorliegen, die Bleche sich aber verformungsfrei voneinander lösen lassen. Eine "ungenügende" Blechqualität bedeutet, dass es bei aufeinanderliegenden Blechen zu punktuellen bis flächigen Verschweißungen gekommen ist oder dass Bleche an Stanz- oder Schneidgraten miteinander verschweißt sind und sich nicht ohne sichtbare Beschädigung trennen lassen oder dass ein Trennen nicht möglich ist oder dass die Bleche deutliche Abdrücke aufweisen.

Tabelle 1

|   | R/Erf | Beschichtung | $\mu_{max}$ | B3 in T | B20 in T | B100 in T | Br in T | $H_c$ in A/m | Magnetik | Blechqualität |
|---|---|---|---|---|---|---|---|---|---|---|
| A | R | unbeschichtet | 12.814 | 1,537 | 1,770 | 2,020 | 1,43 | 37,3 | sehr gut | ungenügend |
| B | R | HITCOAT, beidseitig | 10.240 | 1,437 | 1,687 | 1,963 | 1,36 | 46,4 | ausreichend | ungenügend |

(fortgesetzt)

| | R/Erf | Beschichtung | $\mu_{max}$ | B3 in T | B20 in T | B100 in T | Br in T | $H_c$ in A/m | Magnetik | Blechqualität |
|---|---|---|---|---|---|---|---|---|---|---|
| C | R | HITCOAT, einseitig | 12.467 | 1,493 | 1,737 | 2,001 | 1,39 | 39,8 | gut | ungenügend |
| D | Erf | TX1, 4% mit A. | 13.937 | 1,510 | 1,743 | 2,008 | 1,41 | 38,0 | sehr gut | sehr gut |
| E | Erf | TX1, 7% ohne A. | 12.148 | 1,437 | 1,696 | 1,956 | 1,38 | 46,7 | ausreichend | sehr gut |
| F | Erf | TX1, 7% mit A. | 12.694 | 1,493 | 1,727 | 1,995 | 1,40 | 40,8 | gut | sehr gut |
| G | Erf | TX1, 11% ohne A. | 11.417 | 1,406 | 1,663 | 1,940 | 1,38 | 48,1 | ausreichend | sehr gut |
| H | Erf | TX1, 11% mit A. | 12.959 | 1,502 | 1,732 | 1,995 | 1,41 | 42,2 | gut | sehr gut |

Tabelle 2

| Beispiel | R/Erf | Beschichtung | $\mu_{max}$ | B3 in T | B20 in T | B100 in T | Br in T | $H_c$ in A/m | Magnetik | Blechqualität |
|---|---|---|---|---|---|---|---|---|---|---|
| I | R | unbeschichtet | 14.856 | 1,566 | 1,793 | 2,039 | 1,38 | 31,6 | sehr gut | ungenügend |
| J | Erf | TX1 6% (1x) | 13.128 | 1,476 | 1,726 | 1,996 | 1,39 | 38,4 | gut | sehr gut |
| K | Erf | TX1 6% (2x) | 11.825 | 1,436 | 1,692 | 1,966 | 1,38 | 43,1 | ausreichend | sehr gut |
| L | Erf | TX1 6% (3x) | 10.965 | 1,402 | 1,662 | 1,940 | 1,35 | 45,8 | ausreichend | sehr gut |
| M | Erf | TX1 4% | 13.742 | 1,485 | 1,731 | 2,000 | 1,40 | 37,5 | gut | sehr gut |

Tabelle 1 zeigt eine Zusammenfassung der magnetischen Kennwerte und Lagentrennung von erfindungsgemäßen Zuständen (Erf) und Referenzzuständen (R).

Für jedes Ausführungsbeispiel wurde ein unterschiedlich beschichtetes Band verwendet und aus diesem Probenringe der Abmessung 28,5mm x 20,0 mm gestanzt. Für die Wärmebehandlung wurden jeweils 10 bis 20 Ringe auf einer ebenen Grundplatte gestapelt und der Ringstapel mit einer Deckplatte beschwert. Die Glühung erfolgte bei 1000 °C mit einer Haltezeit von 4 h unter trockenem Wasserstoff. Die Glühtemperatur wurde so gewählt, dass die Glühung im austenitischen $\gamma$-Gebiet erfolgte. Bei der Beispielzusammensetzung liegt der Phasenübergang $\alpha+\gamma\rightarrow\gamma$ laut DSC-Messung (1. Onset Aufheizen) bei 969 °C, so dass mit einer Glühtemperatur von 1000 °C die Haltestufe sicher im $\gamma$-Gebiet liegt und die Einstellung der gewünschten Textur prinzipiell möglich ist.

Probe A stellt die unbeschichtete Referenzprobe dar. Durch die fehlende Beschichtung ist es nicht möglich, diese Bleche in direktem Kontakt miteinander zu glühen. Als Glühhilfsmittel wurde daher ein grobes keramisches Puder verwendet, das die Oberfläche nur teilweise bedeckt. Auf Grund der freien Oberfläche kann sich hier durch die Glühung der höchste Anteil an Würfelflächentextur {001}<uvw> ausbilden. Die Induktion B20 liegt bei 1,770 T, d.h. es liegen sehr gute magnetische Eigenschaften vor. Allerdings führt das Eigengewicht der Bleche dazu, dass sich das Puder während der Glühung in die Oberfläche eindrückt, wodurch eine unzureichende Oberflächenqualität resultiert.

Probe B stellt die Referenzprobe mit einer flächigen, durchgehenden Beschichtung dar. Das Band wurde vorab beidseitig mit HITCOAT beschichtet, einer auf Zirkonpropylat basierenden Beschichtung entsprechend EP 1482072, die nach der Schlussglühung als keramisches Zirkonoxid vorliegt. Durch die technisch nicht vermeidbaren Schneidgrate kommt es bei einer Glühung auf Grund der geringen Dicke der Beschichtung im Bereich von unter einem $\mu$m aber zu Verschweißungen zwischen den Blechen. Da hier die gesamte Oberfläche bedeckt ist, kommt es aber nicht zur bevorzugten Ausbildung einer Würfelflächentextur, was sich in einer sehr niedrigen Induktion B20 von 1,687 T äußert, d.h. einer nur ausreichenden Magnetqualität.

Probe C ist eine Referenzprobe ähnlich zu Probe B, wobei die HITCOAT-Beschichtung nur einseitig vorliegt, d.h. nur auf einer Bandseite. Dazu wurde beim Beschichten des Bandes die Beschichtungslösung auf einer Bandseite mit einer Planwalze vollständig abgequetscht. Auf Grund der freien Oberfläche auf einer Bandseite kommt es beim Glühprozess zu einer Ausbildung der günstigen Texturanteile, so dass eine hohe Induktion B20 von 1,737 T resultiert.

Allerdings ist die Lagentrennung in diesem Ausführungsbeispiel ungenügend. Zum einen kommt es zu Anhaftungen der HITCOAT-Beschichtung an der nominell unbeschichteten Seite, so dass die Bleche mühsam von Hand getrennt werden müssen, was je nach Blechdicke zu Verknickungen führen kann. Desweiteren ist die Schicht so dünn, dass es an Stanzkanten, die wenige μm hoch sein können, zu Verschweißungen der Bleche untereinander kommt.

Probe D ist ein erfindungsgemäßer Zustand, bei dem das Band mit einer als TX1 bezeichneten Beschichtung beidseitig beschichtet wurde. Das Beschichtungsmittel wurde aus folgenden Einzelkomponenten hergestellt:

| 4 Gew.-% | Disperal HP 14/7 | als Glühseparator auf Basis AIO(OH) |
|---|---|---|
| 12 Gew.-% | Plextol M 628 | als Bindemittel |
| 1,3 Gew.-% | Rohagit SD 15 | als Verdickungsmittel |
| 0,3 Gew.-% | Dow Corning Additiv 500 | als Netzmittel |
| 1,3 Gew.-% | Ammoniaklösung (25 %ig) | pH Korrektiv |
| Rest | Wasser vollentsalzt | |

In einem Behälter wird zunächst die benötigte Menge an vollentsalztem Wasser vorgelegt. Darin wird unter Rühren zunächst das Disperal-Pulver, ein auf der Partikeloberfläche chemisch modifiziertes Böhmit, welches dadurch im alkalischen in nanopartikulärer Form dispergierbar wird, hinzugegeben und homogen aufgeschlämmt. Im Anschluss erfolgt unter Rühren die Zugabe des Plextol, des Rohagit sowie des Additiv 500 Netzmittels. Nachdem alles homogen in Wasser verteilt ist, erfolgt die Zugabe der wässrigen Ammoniaklösung, um den pH-Wert der Mischung auf einen Wert von ca. 10 anzuheben. Mit Erreichen dieses pH-Wertes kommt es zum einen zu einer Neutralisation der sauren Verdickerdispersion Rohagit SD 15 unter Bildung eines wasserlöslichen Polyacrylates, zum anderen erfolgt der chemische Aufschluss des Böhmit-Pulvers, wobei dieses etwas bis zur Größe der Primärkristallite als Sol in der Rezeptur verteilt wird.

Diese Beschichtungslösung wird mittels profilierter Abquetschwalzen im Durchlauf auf das zu beschichtende Band aufgebracht und anschließend mit auf 280°C erhitzter Warmluft getrocknet, wobei Bandtemperaturen zwischen 100 und 200 °C zur Trocknung erreicht werden.

Unter profilierten Abquetschwalzen sind hierbei beispielsweise an der Oberfläche gummierte Stahlwalzen zu verstehen, welche beispielsweise mit einem mehrere Millimeter dicken Polyurethanüberzug mit einer Shore Härte zwischen 30 und 50 ShoreD versehen sind, in dessen Oberfläche beispielsweise eine gewindeartige Struktur eingeschliffen wurde, deren Strukturtiefe beispielsweise eine Tiefe zwischen 20 und 200 μm und eine Steigung der Gewindegänge von beispielsweise 0,15 - 1 mm aufweist. Durch die Tiefe dieser Struktur und die Konzentration der zum Beschichten verwendeten Lösung wird die sich nach dem Auftragen und Trocknen einstellende Beschichtungsdicke gesteuert, durch die Gewindesteigung und damit durch den Abstand des linienartigen Auftrags der Anteil an unbeschichteter, freier Oberfläche.

Natürlich stellt das genannte Beispiel einer gewindeartigen Oberflächenstrukturierung nur eines aus einer Vielzahl möglicher Beispiele dar und ist in diesem Sinne nicht als ausschließendes Kriterium zu betrachten. Die Art und Weise der geometrischen Strukturierung spielt in der vorliegenden Erfindung keine wesentliche Rolle. Wichtig ist das Verhältnis von beschichteter zu unbeschichteter Bandoberfläche und die Einhaltung einer Mindestdicke der Beschichtung.

Da sowohl durch die enthaltende Verdickerdispersion als auch durch das dispergierte Böhmit selbst eine ausgeprägte Strukturviskosität erzeugt wird, kommt es zwar unmittelbar beim Auftragen zu einer Scherverdünnung der Beschichtungslösung, unmittelbar nach dem Auftragen steigt die Viskosität aber wieder steil an, so dass ein Verlaufen der Beschichtung zu einem flächigen Auftrag unterbleibt und man als Beschichtung das Negativabbild der Struktur der Beschichtungswalze erhält. Dadurch ist es problemlos möglich, den Anteil an beschichteter Bandoberfläche durch die Struktur der Beschichtungswalze zu definieren. Die für dieses Ausführungsbeispiel verwendete Profilwalze wies einen Durchmesser von 70 mm auf und wurde mittels eines Gewindes mit einer Steigung von 0,60 mm und einer Profiltiefe von 135 μm profiliert.

Unter diesen Bedingungen wurde eine Struktur erzeugt, welche ca. 40 % der Bandoberfläche unbeschichtet lässt, wobei die beschichteten Bereiche eine Schichtdicke von bis zu 4 μm je Bandseite aufweisen. Das Erscheinungsbild der Beschichtung entspricht Streifen in Längsrichtung des Bandes. Nach der Beschichtung und der Trocknung besteht eine sehr gute Haftung der Beschichtung. Ein auf diese Weise beschichtetes Band kann ohne weiteres z.B. auf Zirkularscheren geschnitten werden und aus dem auf Endbreite geschnittenen Band können Stanzteile hergestellt werden.

Nach der Schlussglühung weist die Probe eine sehr gute magnetische Induktion $B_{20}$ von 1,743 T auf, was auf die Ausbildung der Würfelflächentextur schließen lässt. Gleichzeitig lassen sich die Bleche problemlos voneinander trennen, eine händische Separation der Einzellamellen ist nicht notwendig. Nach der Glühung haftet die Beschichtung durch leichtes Ansintern ausreichend gut und übersteht die weitere Handhabung der Bleche. Sie kann allerdings durch Reiben mit dem Finger leicht abgerieben werden.

Probe E stellt eine erfindungsgemäße Abwandlung der Beschichtung von Probe D dar. Hier wurde der Keramikanteil auf 7% erhöht, gleichzeitig aber auf das Verdickungsmittel Rohagit verzichtet. Die Beschichtungslösung hatte also folgende Zusammensetzung:

| | | |
|---|---|---|
| 7 Gew.-% | Disperal HP 14/7 | als Glühseparator |
| 12 Gew.-% | Plextol M 628 | als Bindemittel |
| 0,3 Gew.-% | Dow Corning Additiv 500 | als Netzmittel |
| 1,3 Gew.-% | Ammoniaklösung (25 %ig) | pH Korrektiv |
| Rest | Wasser vollentsalzt | |

Durch die damit insgesamt vergleichsweise niedrige Viskosität von ca. 8 Pa s und die gleichzeitig fehlende Strukturviskosität lag die Beschichtung nicht mehr als streifiger Auftrag vor, sondern verteilte sich gleichmäßig über die Bandoberfläche. Damit waren höchstens 10% der Bandoberfläche unbeschichtet. Die Lagentrennung der Bleche gelingt mit dieser Beschichtungsvariante zwar einwandfrei, d.h. es kam zu keinerlei Anhaftungen der Bleche untereinander. Auf Grund der nicht mehr vorhandenen freien Oberfläche kann in diesem Beispiel für das hier betrachtete Legierungssystem eine als "ausreichend" bewertete Magnetik eingestellt werden, d.h. die Induktion B20 liegt lediglich bei 1,696 T. Da das in dieser Rezeptur fehlende Verdickeradditiv eine nicht-flächige Beschichtung zwar unmöglich macht, auf die Haftfestigkeit der Beschichtung vor der Glühung aber keinen Einfluss hat, besteht auch hier nach der Beschichtung und der Trocknung eine sehr gute Haftung der Beschichtung. Ein auf diese Weise beschichtetes Band kann ohne Weiteres z.B. auf Zirkularscheren geschnitten werden und aus dem auf Endbreite geschnittenen Band können Stanzteile hergestellt werden. Nach der Glühung haftet die Beschichtung durch leichtes Ansintern ausreichend gut und übersteht die weitere Handhabung der Bleche. Sie kann allerdings durch Reiben mit dem Finger leicht abgerieben werden.

Bei Probe F wurde die Rezeptur von Probe E bei gleichem Keramikanteil von 7% noch um ein Verdickungsmittel ergänzt, so dass sich nachfolgende Gesamtrezeptur ergibt:

| | | |
|---|---|---|
| 7 Gew.-% | Disperal HP 14/7 | als Glühseparator |
| 11 Gew.-% | Plextol M 628 | als Bindemittel |
| 1,3 Gew.-% | Rohagit SD 15 | als Verdickungsmittel |
| 0,3 Gew.-% | Dow Corning Additiv 500 | als Netzmittel |
| 1,3 Gew.-% | Ammoniaklösung (25 %ig) pH Korrektiv | |
| Rest | Wasser vollentsalzt | |

Ähnlich wie in Probe D ergibt sich ein nicht-flächiges Erscheinungsbild. Durch die Verwendung einer Profilwalze, die ähnlich aufgebaut ist wie die Walze aus Beispiel D, aber eine geringere Steigung von nur 0,35 mm aufweist, d.h. einen engeren Abstand benachbarter Rillen. Damit ergibt sich ein Erscheinungsbild, bei dem die Linien nicht mehr parallel zur Bandkante verlaufen, sondern diagonal dazu und teilweise noch abzweigen. Es bleiben etwa 60 bis 70% der Oberfläche unbeschichtet. Auch hier ergeben sich viele Beschichtungslücken. Nach der Glühung lassen sich die Bleche ohne Beschädigung voneinander trennen. Die immer noch reichlich vorhandenen freien Bereiche erlauben die Ausbildung der vorteilhaften Texturkomponenten, sodass eine Induktion B20 von 1,727 T erreicht wird, was einer guten magnetischen Qualität entspricht. Nach der Beschichtung und der Trocknung besteht eine sehr gute Haftung der Beschichtung. Ein auf diese Weise beschichtetes Band kann ohne Weiteres z.B. auf Zirkularscheren geschnitten werden und aus dem auf Endbreite geschnittenen Band können Stanzteile hergestellt werden. Nach der Glühung haftet die Beschichtung durch leichtes Ansintern ausreichend gut und übersteht die weitere Handhabung der Bleche. Sie kann allerdings durch Reiben mit dem Finger leicht abgerieben werden.

Das Band für Probe G wurde mit einer erfindungsgemäßen Beschichtung mit einem Keramikanteil von 11% ohne zusätzliches Verdickeradditiv beschichtet.

Die Zusammensetzung der Beschichtungslösung ist somit:

| | | |
|---|---|---|
| 11 Gew.-% | Disperal HP 14/7 | als Glühseparator |
| 17 Gew.-% | Plextol M 628 | als Bindemittel |
| 0,1 Gew.-% | Dow Corning Additiv 500 | als Netzmittel |
| 1,2 Gew.-% | Ammoniaklösung (25 %ig) | pH Korrektiv |
| Rest | Wasser vollentsalzt | |

Auf dem Band ergibt sich ein vollflächiges Erscheinungsbild, der Flächenanteil unbeschichteten Materials ist deutlich unter 10%. Die vollflächige Beschichtung führt zwar zu einer sehr guten Lagentrennung bei der Schlussglühung, unterdrückt bei der gewählten Legierung aber gleichzeitig auch die Ausbildung der gewünschten kristallographischen Orientierungen. Entsprechend liegt die Induktion B20 mit 1,663 T vergleichsweise niedrig, d.h. die magnetische Qualität ist als ausreichend bewertet.

Für die erfindungsgemäße Probe H wurde die Beschichtungslösung aus Beispiel G noch um ein Verdickeradditiv ergänzt. Die Gesamtrezeptur ergibt sich damit zu:

| | | |
|---|---|---|
| 11 Gew.-% | Disperal HP 14/7 | als Glühseparator |
| 16 Gew.-% | Plextol M 628 | als Bindemittel |
| 1,3 Gew.-% | Rohagit SD 15 | als Verdickungsmittel |
| 0,1 Gew.-% | Dow Corning Additiv 500 | als Netzmittel |
| 1,2 Gew.-% | Ammoniaklösung (25 %ig) | pH Korrektiv |
| Rest | Wasser vollentsalzt | |

Durch diese Änderung der Viskosität kann das Verlaufen der Beschichtung teilweise unterdrückt werden. Es resultieren Streifen, die im Vergleich zu Beispiel D relativ breit sind. Entsprechend bleiben noch etwa 30 bis 50% der Fläche unbeschichtet. Eine Schlussglühung gelingt damit ohne Probleme, d.h. die Bleche lassen sich hervorragend trennen. Trotz der bereits relativ dicken Streifen wird bei der Wärmebehandlung auf Grund der frei bleibenden Oberflächenbereiche eine gute Magnetik mit einer Induktion B20 von 1,732 T eingestellt. Nach der Beschichtung und der Trocknung besteht eine sehr gute Haftung der Beschichtung. Ein auf diese Weise beschichtetes Band kann ohne Weiteres z.B. auf Zirkularscheren geschnitten werden und aus dem auf Endbreite geschnittenen Band können Stanzteile hergestellt werden. Nach der Glühung haftet die Beschichtung durch leichtes Ansintern ausreichend gut und übersteht die weitere Handhabung der Bleche. Sie kann allerdings durch Reiben mit dem Finger leicht abgerieben werden.

Tabelle 2 zeigt eine Zusammenfassung der magnetischen Kennwerte und Lagentrennung eines weiteren Vergleichsbeispiels (R) und vier weiterer erfindungsgemäßer Beispiele (Erf).

Die Probe I ist ein Referenzbeispiel des unbeschichteten Bands, das für die weiteren Ausführungsbeispiele J, K und L zum Einsatz kam. Das Band der Legierung VACOFLUX X1 weist eine Banddicke von 0,20 und eine Zusammensetzung 17,15 Gew.-% Co, 1,49 Gew.-% V, 0,23 Gew.-% Si, 0,11 Gew.-% Mn, Rest Fe auf. Wie bei dem Proben A bis H der Tabelle 1 wurde für jedes Ausführungsbeispiel ein unterschiedlich beschichtetes Band verwendet und aus diesem Probenringe der Abmessung 28,5mm x 20,0 mm gestanzt. Für die Wärmebehandlung wurden jeweils 10 bis 20 Ringe auf einer ebenen Grundplatte gestapelt und der Ringstapel mit einer Deckplatte beschwert. Die Schlussglühung erfolgte bei 1000 °C mit einer Haltezeit von 4 h unter trockenem Wasserstoff. Die Glühtemperatur wurde so gewählt, dass die Glühung im austenitischen $\gamma$-Gebiet erfolgte. Bei der Beispielzusammensetzung liegt der Phasenübergang $\alpha+\gamma\rightarrow\gamma$ laut DSC-Messung (1. Onset Aufheizen) bei 969 °C, so dass mit einer Glühtemperatur von 1000 °C die Haltestufe sicher im $\gamma$-Gebiet liegt und die Einstellung der gewünschten Textur prinzipiell möglich ist.

Die Wärmebehandlung der unbeschichteten Probenringe erfolgte in keramischem Glühpuder, das als Glühseparator diente, um ein Verschweißen der Ringe miteinander zu vermeiden. Da die Probe I keine Beschichtung aufweist, konnte der Wasserstoff während der Glühung die Oberfläche ausreichend reduzieren und es stellte sich beim Abkühlen während des Durchlaufens des Zweiphasengebiets ($\alpha+\gamma$) die gewünschte Würfelflächentextur ein. Entsprechend ergaben sich für die Magnetik, die in der Bandebene gemessen wird, sehr gute Kennwerte. Der Nachteil dieses Verfahren ist, dass sich keine planen Bleche herstellen lassen und es zudem zu Abdrücken durch das Glühpuder kommen kann. Daher wird die Blechqualität als ungenügend bewertet.

Für die erfindungsgemäße Beschichtungsvariante J wurde unter Beibehaltung aller Rezepturkomponenten des Ausführungsbeispiels H, mit Ausnahme der als rheologisches Additiv wirksamen Dispersion Rohagit SD 15, eine alternative Zusammensetzung erprobt, bei welcher die benötigten rheologischen Eigenschaften durch Zugabe einer anquellverzögerten Methyl-Hydroxyethylcellulose eingestellt wurden.

Die Beschichtungsrezeptur J hatte folgende Zusammensetzung:

| | | |
|---|---|---|
| 6 Gew% | Disperal HP 14/7 | als Glühseparator |
| 10 Gew% | Plextol M 628 | als Bindemittel |
| 0,8 Gew% | Tylose MH 30000 YP4 | als Verdickungsmittel |
| 0,1 Gew% | Dow Corning Additiv 500 | als Netzmittel |
| 1,2 Gew% | Ammoniaklösung (25 %ig) | pH Korrektiv |
| Rest | Wasser vollentsalzt | |

In einem Behälter wird zunächst die benötigte Menge an vollentsalztem Wasser vorgelegt. Darin wird unter Rühren zunächst das Disperal-Pulver, ein auf der Partikeloberfläche chemisch modifiziertes Böhmit, welches dadurch im Alkalischen in nanopartikulärer Form dispergierbar wird, sowie die ebenfalls pulverförmige Tylose zugegeben und homogen aufgeschlämmt. Im Anschluss erfolgt unter Rühren die Zugabe des Plextol M 628 sowie des Additiv 500 Netzmittels. Nachdem alles homogen in Wasser verteilt ist, erfolgt die Zugabe der wässrigen Ammoniaklösung, um den pH-Wert der Mischung auf einen Wert von ca. 10 anzuheben. Mit Erreichen dieses pH-Wertes werden die anquellverzögernden Eigenschaften der Tylose aufgehoben und die Tylose geht unmittelbar in Lösung. Parallel dazu erfolgt der chemische Aufschluss des Böhmit - Pulvers, wobei dieses etwas bis zur Größe der Primärkristallite als Sol in der Rezeptur verteilt wird. Die Viskosität des Beschichtungsansatzes steigt durch beide Effekte innerhalb weniger Minuten sehr stark an und erreicht nach längstens 30 Minuten einen stabilen und für die Weiterverarbeitung geeigneten Endzustand.

Diese Beschichtungslösung wird dann mittels profilierter Abquetschwalzen im Durchlauf auf das zu beschichtende Band aufgebracht und anschließend mit auf 280 °C erhitzter Warmluft getrocknet, wobei Bandtemperaturen zwischen 100 und 200 °C zur Trocknung erreicht werden.

Der Anteil an beschichteter- bzw. unbeschichteter Bandoberfläche lässt sich dabei analog zum Vorgehen bei den bisher beschriebenen Ausführungsbeispielen durch Wahl eines geeigneten Walzenprofils der Abquetschrollen einstellen.

Die Beschichtungslösung J hat sich dabei als besonders geeignet herausgestellt, da das Verlaufen der Lösung nach dem Austritt aus dem Walzspalt zum größten Teil verhindert wird und sich somit das gewünschte Beschichtungsprofil (z.B. Längsstreifen) sehr genau einstellen lässt.

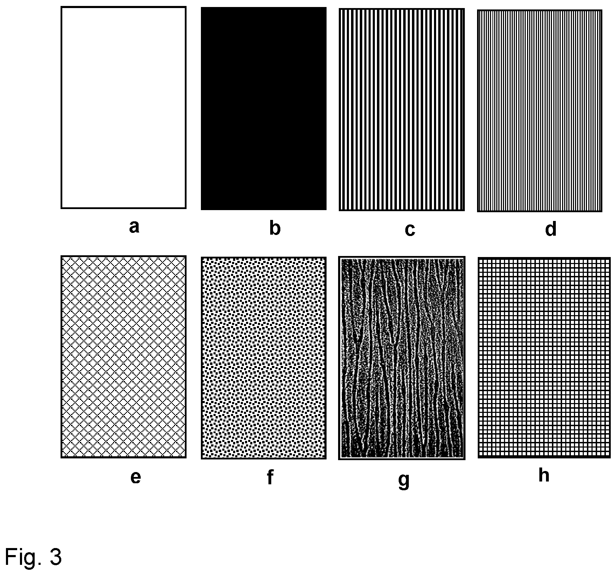

Die mit diesem Ansatz erzeugte Beschichtung weist ein streifiges Profil auf, ähnlich dem Bild c bzw. d, die in Fig. 3 dargestellt sind. Eine quantitative Auswertung des Al-Anteils anhand von EDX ergab einen Flächenanteil von 50 %.

Die Glühung der aus dem Band hergestellten Proberinge erfolgte wie bei allen beschichteten Beispielen in einem Aufbau im Stapel mit einer leichten Beschwerung durch eine Keramikplatte. Trotz dieser Beschwerung und der hohen Temperaturen von 1000°C war die Lagentrennung auf Grund der vorhandenen Beschichtung einwandfrei und durch den Glühaufbau waren die Bleche nach der Glühung plan. Auch die magnetischen Kennwerte können als gut bewertet werden, was auf die nur teilweise Beschichtung der Oberfläche zurückzuführen ist, die bei der magnetischen Schlussglühung unter Einwirkung von Wasserstoff die Ausbildung einer in Bandebene magnetisch vorteilhaften Würfelflächentextur erlaubt.

Bei der erfindungsgemäßen Probe K wurde die gleiche Beschichtungslösung wie im Beispiel J gewählt. Allerdings wurden die Bänder mittels eines Handprozesses mit der gleichen Beschichtungslösung nachbeschichtet. Die Streifenmuster beim zweiten Beschichtungsauftrag wurden quer zur Walzrichtung aufgebracht, so dass sich insgesamt ein Karomuster ergab, ähnlich dem Beschichtungsbild h aus Fig. 3. Die Flächenbelegung an Al steigerte sich durch den mehrmaligen Auftrag auf einen Anteil von 70 %. Durch die stärkere Flächenbelegung verschlechtern sich die durch die Schlussglühung erreichbaren magnetischen Kenngrößen, so dass die Induktion B20 mit 1,692 T nur noch als ausreichend bewertet werden kann. Die Lagentrennung ist aber weiterhin sehr gut, so dass die Blechqualität als sehr gut zu bewerten ist.

Die Probe L wurde ebenfalls mit der Beschichtungslösung aus Beispiel J angefertigt. Mit einem Handprozess wurde das Band zweimal nachbeschichtet, so dass insgesamt ein dreifacher Beschichtungsauftrag vorlag. Durch das mehrfache Auftragen ergab sich eine sehr dichte Belegung der Oberfläche, was an dem hohen Flächenanteil an Al von 90 % deutlich wird. Daraus gefertigte Ringproben zeigen nach der Schlussglühung im Stapel zwar eine sehr gute Lagentrennung, allerdings eine nur noch ausreichende Induktion B20 von 1,662 T.

Die Probe M wurde mit der gleichen Beschichtungslösung wie Probe D gefertigt, d.h. mit einem Böhmit-Anteil von 4 Gew. % und der Verwendung von Rohagit SD 15 als Verdickungsmittel. Das resultierende Beschichtungsbild entsprach dem von verästelten Linien, ähnlich dem Referenzmuster g aus Fig. 3. Der mittels EDX bestimmte Flächenanteil von Aluminium lag bei 43%.

Der Zusammenhang zwischen dem Flächenanteil und der Magnetik wurde untersucht. In Tabelle 3 sind für die fünf Ausführungsbeispiele I, J, K, L und M das optische Erscheinungsbild der Beschichtung, das passende Referenzbild aus Fig. 3 und der mittels EDX bestimmte Flächenanteil $A_{Al}$ des Al-Gehalts als Maß für die Bedeckung mit der Beschichtung angegeben. Die beiden magnetischen Kennwerte B20 und Hc entsprechen den an Proberingen gemessenen Kennwerten nach der Schlussglühung, wie sie auch in den Tabellen 1 und 2 angegeben sind.

Tabelle 3

| Beispiel | R/Erf | Erscheinungsbild | Muster | $A_{Al}$ in % | B20 in T | $H_c$ in A/m |
|---|---|---|---|---|---|---|
| I | R | unbeschichtet | a | 0 | 1,793 | 31,6 |
| J | Erf | Streifen | d | 50 | 1,726 | 38,4 |
| K | Erf | Karomuster | h | 70 | 1,692 | 43,1 |

(fortgesetzt)

| Beispiel | R/Erf | Erscheinungsbild | Muster | $A_{Al}$ in % | B20 in T | $H_c$ in A/m |
|----------|-------|------------------|--------|---------------|----------|--------------|
| L | Erf | nahezu dicht | b | 90 | 1,662 | 45,8 |
| M | Erf | verästelt | 9 | 43 | 1,731 | 37,5 |

Tabelle 3 zeigt das Erscheinungsbild, das dazugehörige Referenzmuster der beschichteten Bereiche, die Flächenbelegung und ferner die magnetischen Kennwerte B20 bzw. Hc für die Ausführungsbeispiele I bis M der Tabelle 2.

Die fünf Beispiele stellen somit den unbeschichteten Referenzzustand I und vier erfindungsgemäße Ausführungsbeispiele J, K, L und M mit Flächenanteil der Beschichtung zwischen 43% und 90% dar.

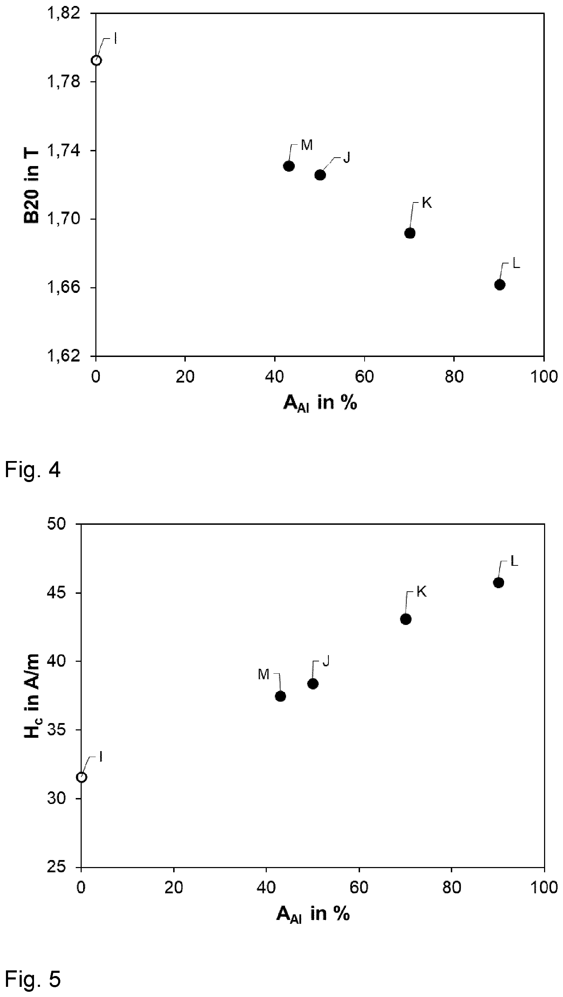

In Fig. 4 ist die magnetische Induktion B20 (B20 = B(20 A/cm)) nach der Schlussglühung in Abhängigkeit von dem Al-Flächenanteil $A_{Al}$ durch die Al-haltige Beschichtung. Die Messung wird durch EDX durchgeführt, wobei der Flächenanteil an Al ausgewertet wurde. Für die Anwendung z.B. in elektrischen Maschinen ist die Einstellung einer möglichst hohen Induktion wünschenswert, da man damit Maschinen mit hoher Leistungsdichte realisieren kann.

Die höchsten Induktionswerte erhält man ohne Beschichtung mit einem Flächenanteil von 0%. Dieser Zustand ist wie bereits erläutert aber nicht für einen industriellen Prozess zur Glühung von Blechen geeignet. Durch die erfindungsgemäße Beschichtung ist es möglich, gezielt eine anteilige Flächenbelegung einzustellen, so dass die gewünschte Würfelflächentextur anteilig eingestellt wird und eine höhere Induktion B20 resultiert, als es mit einer vollflächigen Beschichtung möglich wäre. Damit wird einerseits eine gute Lagentrennung gewährleistet und andererseits eine möglichst hohe Induktion eingestellt.

Ergänzend dazu zeigt Fig. 5 die Koerzitivfeldstärke $H_c$ nach der Schlussglühung in Abhängigkeit von der Flächenbelegung durch die Al-haltige Beschichtung $A_{Al}$. Die Messung wird durch EDX durchgeführt, wobei der Flächenanteil an Al ausgewertet wurde. Für die Anwendung z.B. in elektrischen Maschinen wird eine möglichst niedrige Koerzitivfeldstärke angestrebt, da somit der Hystereseanteil der Ummagnetisierungsverluste sinkt und die Effizienz der Maschine steigt.

Auch hier zeigt sich der Vorteil der erfindungsgemäßen Beschichtung, d.h. durch Einstellung von Flächenanteilen der Beschichtung z.B. zwischen 20% und 80% lassen sich niedrigere Koerzitivfeldstärken erzielen als bei einer vollständig bedeckten Probe mit einer Bedeckung von 100% zu erwarten sind. Gleichzeitig ist diese Bedeckung ausreichend, um eine sichere Lagentrennung nach der Schlussglühung zu gewährleisten.

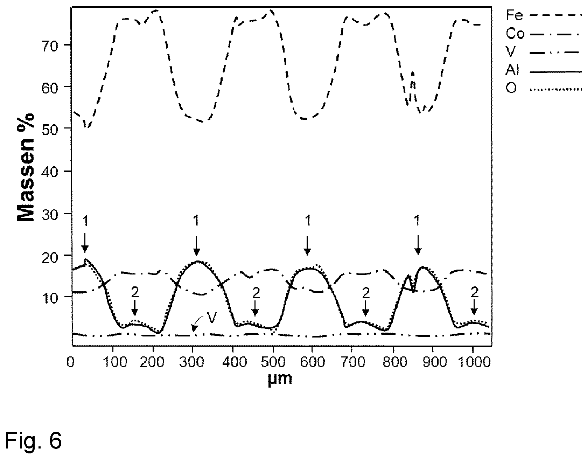

Fig. 6 zeigt beispielhaft das Ergebnis einer EDX-Linienanalyse über einen 1 mm langen Abschnitt einer ungeglühten Bandprobe aus dem Ausführungsbeispiel J. dieses Beispiel weist eine streifige Beschichtung auf. Die EDX-Linienanalyse wurde über mehrere Beschichtungsstreifen hinweg durchgeführt. Da die Eindringtiefe der EDX-Analyse deutlich größer als die Schichtdicke ist, die im Bereich von wenigen $\mu m$ liegt, ist selbst in den beschichteten Bereichen stets noch ein signifikanter Anteil an Fe, Co und V vorhanden. Die Elemente Fe, Co und V sind Grundbestandteile der Legierung VACOFLUX X1 und auf diese zurückzuführen, während die Elemente Al und O nur in der Beschichtung auftreten. Der Al-Anteil ist dabei eindeutig auf das Böhmit zurückzuführen, die in den Ausführungsbeispielen durch die Komponente DISPERAL HP 14/7 eingestellt wird. Wird die erfindungsgemäße Beschichtung auf eine Legierung mit Al-Anteil aufgebracht, kann zur Bestimmung der beschichteten Bereiche alternativ auch der O-Anteil verwendet werden.

In der Fig. 6 erkennt man die Maxima (1) des Al- bzw. O-Anteils, die im optischen Erscheinungsbild als weiße Streifen erkennbar sind. Die Minima (2) entsprechen dabei den Bereichen ohne nennenswerten Beschichtungsanteil, d.h. dies entspricht den Zwischenräumen, in denen bei lichtoptischer Betrachtung die metallische Oberfläche des Grundmaterials gut zu erkennen ist.

Die Breite der Streifen beträgt in diesem Beispiel bis zu 200 $\mu m$ und kann je nach verwendetem Profil der Abquetschwalze im Beschichtungsprozess gezielt variiert werden. Die Breite der Zwischenräume liegt im Bereich von 100 $\mu m$.

In einem weiteren Ausführungsbeispiel liegt die Breite der Streifen bei 400 $\mu m$ und die Breite der Zwischenräume bei 300 $\mu m$.

Aus den Ausführungsbeispielen wird deutlich, dass ein Kriterium für die Ausbildung einer guten oder sehr guten Magnetik die frei bleibende Oberfläche ist. Es muss ein Kompromiss gefunden werden zwischen ausreichender Lagentrennung, die eine möglichst flächige Beschichtung erfordert, und ausreichend freier Oberfläche für die magnetische Schlussglühung, welche für gute Magnetwerte notwendig ist.

Ob sich eine flächige oder eine diskrete Beschichtung ausbildet, ist maßgeblich durch die Strukturviskosität der Beschichtungslösung bestimmt. Das im Einzelfall vorliegende Erscheinungsbild der Beschichtung, d.h. ob gerade Streifen, verästelte Strukturen oder netzartige Muster vorliegen, ist dabei von einer Vielzahl weiterer Randbedingungen abhängig, z.B. der Profiltiefe und Rillenabstand der Profilwalzen, dem Anpressdruck der Walzen oder der Bandgeschwindigkeit.

Die Anwendbarkeit der Beschichtung ist nicht auf die im Beispiel genannte Legierung oder Fe-Co-Legierungen beschränkt.

Zur Einstellung der Würfelflächentextur ist lediglich das Vorhandensein der Phasenübergänge $\alpha \rightarrow \alpha + \gamma \rightarrow \gamma$ notwendig, d.h. das ferritische Material muss während der Haltestufe im austenitischen $\gamma$-Gebiet geglüht werden. Es wird angenommen, dass adsorbierte Fremdatome, wie z.B. aus dem Material diffundierter Schwefel, die Oberflächenenergien der Kristalle so verändern, dass die (001) Orientierungen mit der Würfelkante in der Blechebene energetisch günstiger sind als die (111)-Orientierungen mit der Raumdiagonale in der Blechebene und sich bevorzugt bilden. Demzufolge darf die Beschichtung nicht die gesamte Oberfläche bedecken, da sich ansonsten die Fremdatome nicht auf der Oberfläche anlagern können. Je nach Breite des Zweiphasengebiets, Zusammensetzung, Bespülung und den thermischen Verhältnissen müssen Parameter wie die Haltetemperatur oder die Aufheiz- bzw. Abkühlrate beim Durchlaufen des Zweiphasengebiets $\alpha + \gamma$ angepasst werden.

Weitere Zusammensetzungen, bei denen Variationen der genannten Beschichtung die Glühung im $\gamma$-Gebiet und damit die Ausbildung der Würfelflächentextur ermöglichen, sind z.B.

- Reineisen, d.h. Legierungen aus mindestens 99,5 Gew. % Fe und erschmelzungsbedingten Verunreinigungen,

- FeSi-Legierungen mit bis zu 5 Gew. % Si und Co-Zulegierung, d.h. der Zusammensetzungsbereich Fe, 2 Gew. % ≤ Co ≤ 10 Gew. %, 0,05 Gew. % ≤ Mn ≤ 5 Gew. %, 0,05 Gew. % ≤ Si ≤ 5 Gew. %, optional bis zu 3 Gew. % Cr, bis zu 2 Gew. % V, bis zu 1 Gew. % Ni, bis zu 0,05 Gew. % Nb und bis zu 0,02 Gew. % C, die in der US 2016/0329139A1 offenbart ist, eine Zusammensetzung aus dem Bereich ist Fe, 5,0 Gew. % Co, 2,3 Gew. % Si, 1,0 Gew. % Mn, 0,3 Gew. % Cr, 0,005 Gew. % C, die unter dem Handelsnamen HYPOCORE erhältlich ist.

- FeCo-Legierungen mit Co-Gehalten zwischen 20 und 30 Gew.-%, d.h. der Zusammensetzungsbereich Fe, 20 ,Gew. % ≤ Co ≤ 30 Gew. %, 0 Gew. % ≤ Cr ≤ 0,6 Gew. %, 0,06 Gew. % ≤ (Nb+Ta) ≤ 0,8 Gew.-%, 0 Gew. % ≤ (Si+Mn) ≤ 0,5 Gew. %, 0 Gew. % ≤ Ce ≤ 0,01 Gew. %, bis zu je 1 Gew. % von Ni, Al, V, Mo, bis zu je 0,1 Gew. % von Zr, Ti, Cu, bis zu 0,02 Gew. % O, bis zu 0,01 Gew. % von W, S, N, P, C, B, die in der DE 10 2014 100 589 A1 offenbart ist und mit dem Handelsnamen VACOFLUX 27 von Vacuumschmelze GmbH & Co. KG, Hanau, Deutschland kommerziell erhältlich ist.

- FeSi mit bis etwa 1,9 Gew. % Si, da bis zu diesem Gehalt noch ein Zweiphasengebiet $\alpha + \gamma$ vorliegt.

Ein weiterer Anwendungsbereich sind ferritische Legierungen ohne Phasenübergang $\alpha \rightarrow \alpha + \gamma \rightarrow \gamma$, bei denen die Ausbildung einer Würfelflächen- oder Würfeltextur alleine durch eine Sekundärrekristallisation ausgelöst werden kann, wie beispielsweise in der DE1029845 offenbart ist. Beispiele sind FeSi-Legierungen mit 2 bis 5 Gew.% an Silizium und Aluminium. Auch hier ist die Modifikation der Oberflächenenergie durch Fremdatome wieder die Voraussetzung für die präferierte Ausbildung der Würfeltextur. Während das Modell zur Ausbildung der Textur bereits seit langem bekannt ist, ermöglicht die erfindungsgemäße Zusammensetzung die kommerzielle Nutzung, da die Beschichtung den Mechanismus nicht unterdrückt.

Mögliche relevante Zusammensetzungsbereiche sind z.B.

- FeSi-Legierungen mit 2 bis 4,5 Gew. % (Si + Al). Durch den hohen Si-Anteil wird das Zweiphasengebiet $\alpha + \gamma$ abgeschnürt und die $\gamma$-Phase unterdrückt. Beispiele sind alle gängigen Elektrobleche, wobei hier oft noch bis zu 1 Gew.-% Si durch Al substituiert ist. Ein Beispiel ist die Legierung mit dem Handelsnamen TRAFOPERM N4 mit 2,4 Gew. % Si, 0,35% Al und bis zu 0,2 Gew. % Mn, die von Vacuumschmelze GmbH & Co KG, Hanau Deutschland kommerziell erhältlich ist.

- FeSi-Legierungen mit 4 bis 7 Gew. % Si, optional auch weitere Zusätze wie 0,1 Gew. % ≤ (Cr und/oder Mo) ≤ 7 Gew. %, 0,1 Gew. % ≤ (Co und/oder Ni) ≤ 10 Gew. %, bis zu 7 Gew. % von Al, Mn, Cu, Ge, Ga, bis zu 7 Gew. % von Ti, V, Hf, Nb, W, bis zu 1 Gew. % von B, Zr, Mg, P, Ce, die in der US 2018/0336982 A1 offenbart ist.

Ein Band, das die erfindungsgemäße Beschichtung aufweist, kann auf unterschiedliche Art und Weise weiterverarbeitet werden. Typischerweise werden für elektrische Motoren oder Generatoren Blechpakete hergestellt, bei denen eine Vielzahl an Blechschnitten (Lamellen) aufeinandergestapelt wird. Der Begriff Blechpaket kann hierbei z.B. eine Stator- oder Rotorgeometrie bezeichnen, er kann sich aber auch auf eine Komponente davon beziehen, z.B. auf ein Statorsegment, auf einen einzelnen Statorzahn oder auf einen Statorring, in den Statorzähne eingeschoben werden.

Ein beispielhafter Fertigungsweg ist die Fertigung von Einzellamellen, die zu einem Blechpaket gefügt werden. Dieser Weg ist gut geeignet für kleine bis mittlere Stückzahlen. Der Fertigungsablauf sieht wie folgt aus

- Bereitstellung eines Bandes an Enddicke
- Teilweises Beschichten des Bandes mit der erfindungsgemäßen Zusammensetzung
- Formen der Lamellen, z.B. durch Stanzen oder Laserschneiden
- Glühen der Lamellen, vorzugsweise im Stapel mit Deckplatte zur Beschwerung
- Fügen der Lamellen zu einem Blechpaket, z.B. durch Kleben oder Laserschweißen

In einem anderen Beispiel werden die Einzellamellen zunächst miteinander gefügt und anschließend das Blechpaket als solches geglüht:

- Bereitstellung eines Bandes an Enddicke
- Teilweises Beschichten des Bandes mit der erfindungsgemäßen Zusammensetzung
- Formen der Lamellen, z.B. durch Stanzen oder Laserschneiden
- Fügen der Lamellen zu einem Blechpaket, z.B. durch Laserschweißen
- Glühen des Blechpakets, ggf. mit Beschwerung

In einem weiteren Beispiel erfolgt die Formgebung der Lamellen und das Fügen des Blechpakets in einem kombinierten Schritt:

- Bereitstellung eines Bandes an Enddicke
- Teilweises Beschichten des Bandes mit der erfindungsgemäßen Zusammensetzung
- Formen der Lamellen und Fügen zum Blechpaket durch Stanzpaketieren
- Glühen des Blechpakets, ggf. mit Beschwerung

In allen Ausführungsbeispielen sollen die Bleche während der Glühung nicht miteinander verschweißen, so dass die erfindungsgemäße Beschichtung zur Lagentrennung verwendet wird.

Die in den bevorzugten Ausführungsformen und in den Beispielen erläuterte teilweise Bedeckung der Oberfläche kann auf verschiedene Arten quantifiziert werden:

Bei Begutachtung mit dem bloßen Auge sind die beschichteten Bereiche dadurch gekennzeichnet, dass das metallische Schimmern der Bandoberfläche nicht mehr zu erkennen ist. Im ungeglühten Zustand erscheinen diese Bereiche weißlich, im geglühten Zustand weiß bis braun. Je nach Auftragungsart gibt es immer Bereiche, die nur sehr schwach mit Aluminiumoxidpartikeln belegt sind, z.B. die Zwischenräume zwischen dicken, eindeutig belegten Bereichen oder aber auch ein flächiger Grundbelag, der wie ein Schleier auf dem Band liegt. Diese Bereiche sind optisch dadurch gekennzeichnet, dass sie vor der Glühung trüb erscheinen und die Metalloberfläche darunter noch zu erkennen ist. Durch die so geringe Belegung der Bereiche steht dieser Restanteil an Beschichtung der Ausbildung einer Würfelflächentextur nicht im Wege und wird somit nicht als belegt bewertet.

Eine Quantifizierung der Oberflächenbelegung mit metallographischen Methoden, d.h. mit dem Mikroskop, ist auch möglich, z.B. durch ein Linienverfahren oder durch eine computerbasierte Flächenauswertung. Dieses Verfahren kann allerdings aufwendig sein, falls eine eindeutige farbliche Trennung zwischen beschichteten und nicht-beschichteten Bereichen nicht vorliegt und somit viele Bereiche von Hand bewertet werden.

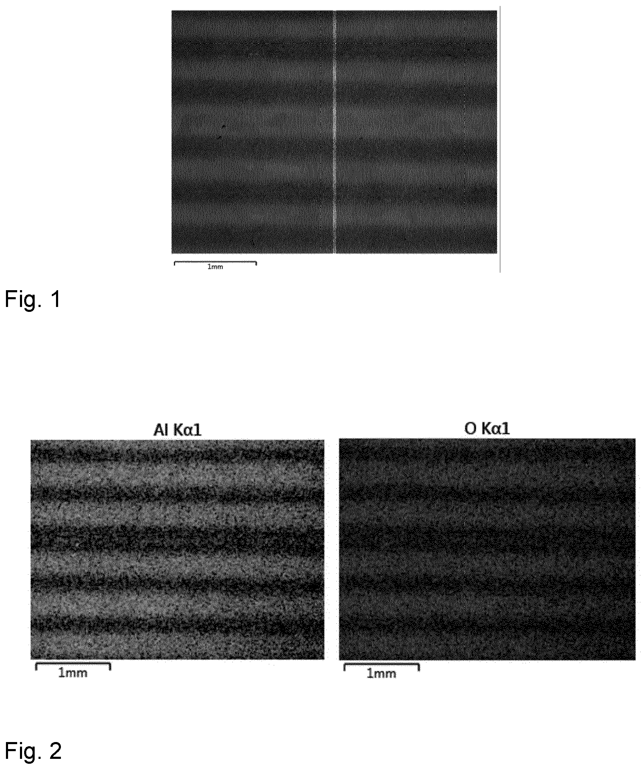

Auch eine Quantifizierung im Rasterelektronenmikroskop ist möglich. In Figur 1 ist eine REM-Aufnahme eines Bandes aus einer weichmagnetischen Legierung zu sehen, auf dessen Oberfläche eine strukturierte Beschichtung aufgebracht worden ist, die eine Streifenstruktur dargestellt, wie sie bei Ausführungsbeispiel D resultiert. Die hellen Bereiche entsprechen dabei den unbeschichteten Zwischenräumen, die dunklen Bereiche entsprechen den beschichteten Streifen.

Eine eindeutigere Zuordnung lässt sich mittels eines Element-Mappings im EDX treffen. Dabei kann im konkreten Fall von VACOFLUX X1 die Belegung mit Sauerstoff und Aluminium als Indikator für Aluminiumoxid verwendet werden, da beide Elemente in der Grundlegierung nicht enthalten sind. In Figur 2 ist ein Beispiel für ein solches Element-Mapping der gleichen Probe D dargestellt. Die hellen Bereiche entsprechen dabei den beschichteten Bereichen, während die dunklen Bereiche nahezu kein Aluminium bzw. Sauerstoff aufweisen. Die Helligkeit ist dabei kein Indikator für die Konzentration, sondern zeigt lediglich eine höhere Dichte an Aluminiumoxid-Partikeln an. Auf Grund dieser Aufnahme wurde eine Oberflächenbelegung mit $Al_2O_3$ von 56% bestimmt.

In einem Ausführungsbeispiel wird bei einer weiteren erfindungsgemäßen Probe mit einem Keramikanteil von 4% in der Beschichtungslösung eine $Al_2O_3$-Flächenbelegung von 30% bestimmt. Bei einer weiteren nicht-erfindungsgemäßen Probe wurde hingegen eine Flächenbelegung von nur bis zu 19% bestimmt. Diese Probe zeichnete sich zwar durch eine sehr gute Magnetik nach der Schlussglühung aus, die Trennung der Lagen war allerdings unzureichend, so dass daraus gefertigte Bleche, die während der Glühung miteinander in Kontakt waren, punktuelle oder flächige Verschweißungen aufweisen.

In Figur 3 sind beispielhafte Abbildungen für Oberflächenmuster dargestellt, wobei die Beispiele a, b die Referenzzustände darstellen und die anderen Beispiele erfindungsgemäße Oberflächen sind.

Beispiel a zeigt ein Blech ohne Beschichtung. Während hier die Ausbildung einer Würfelflächentextur möglich ist, können unbeschichtete Bleche nicht ohne Weiteres geglüht werden, da sie bei den hohen Temperaturen von typischerweise über 900°C miteinander verschweißen.

Beispiel b zeigt eine flächige Beschichtung, ohne Unterbrechungen. Dies entspricht den Beschichtungen wie HITCOAT oder DL1. Während man auch mit einer solchen Beschichtung eine sehr gute Lagentrennung bei der Schlussglühung im γ-Gebiet erzielt, ist es nicht möglich, einen signifikanten Anteil an Würfelflächentextur auszubilden.

Beispiel c zeigt eine streifige Struktur. Die dunklen Streifen entsprechen Bereichen mit einer sehr dichten Belegung an Al-haltigen Partikeln. Die hellen Bereiche zwischen den Streifen enthalten keine oder nur sehr wenige Partikel, so dass diese Schichten typischerweise transparent erscheinen. Natürlich findet sich in den Zwischenbereichen im ungeglühten Zustand ggf. auch noch Bindemittel.

Beispiel d zeigt ebenfalls eine streifige Struktur. Im Gegensatz zu Beispiel c sind die mit Al-Partikeln angereicherten dunklen Streifen schmaler als in Beispiel c. Dies erlaubt eine besondere Ausbildung der Würfelflächenstruktur, erhöht aber das Risiko von Blechanhaftungen durch die Glühung.

Beispiel e zeigt eine Gitterstruktur, bei der die Linien diagonal zur Bandrichtung verlaufen.

Beispiel f zeigt eine Beschichtung, bei der sich lokale Ansammlungen von Partikeln gebildet haben, die von freien Bereichen umgeben sind. Die Partikel sind vor der Glühung gebunden, so dass die Beschichtung haftet.

Beispiel g zeigt schematisch das Erscheinungsbild einer tatsächlich aufgebrachten Beschichtung. Beim Beschichten hat die verwendete Dispersion eine niedrigere Viskosität als in Beispiel c und d aufgewiesen, so dass die Beschichtung nach dem Aufbringen noch länger Gelegenheit hatte, seitlich zu verlaufen. Es resultiert ein streifiger Verlauf mit Verästelungen. Man erkennt in dieser Darstellung zudem, dass die freien Bereiche, die in den idealisierten Darstellungen vollständig weiß erscheinen, in der Praxis immer auch einen Anteil feiner Al-Partikel enthalten. Die Konzentration in diesen Bereichen ist allerdings im Vergleich zu den dicken Streifen sehr gering.

Beispiel h zeigt eine Gitterstruktur, bei der die Linien parallel bzw. quer zur Bandrichtung verlaufen.

Zusammengefasst wird eine wasserbasierte alkalische Zusammensetzung bereitgestellt, die zum Bilden einer Isolationsschicht eines Glühseparators verwendet wird. Eine weichmagnetische Legierung mit einer Beschichtung aus dieser wasserbasierten alkalischen Zusammensetzung wird auch bereitgestellt. Insbesondere kann die Zusammensetzung mit einer definierten Struktur bzw. einem Muster auf die Oberfläche der Legierung aufgebracht werden, so dass Teile der Oberfläche frei von der Beschichtung liegen. Somit kann während einer geeigneten Wärmebehandlung im FCC-Phasengebiet eine {100}<uvw>-Würfelflächentextur gebildet und gleichzeitig der Anteil an einer {111}<uvw>-Textur unterdrückt werden. Somit kann eine weichmagnetische Legierung mit guten magnetischen Eigenschaften hergestellt werden.

## Patentansprüche

1.  Wasserbasierte alkalische Zusammensetzung zum Bilden einer Isolationsschicht eines Glühseparators auf einer weichmagnetischen Legierung, aufweisend:

    keramische Partikel mit einer Durchschnittspartikelgröße von 10 nm bis 90 nm aufweisen,
    zumindest eine Polymerdispersion als Bindemittel, wobei die Polymerdispersion eines oder mehrere oder Mischpolymerisate der Gruppe bestehend aus Acrylatpolymeren, Methacrylatpolymeren, Polyvinylacetat, Polystyrol, Polyurethan, Polyvinylalkohol, hydroxylierte Celluloseether, Polyvinylpyrrolidon, und Polyvinylbutyral aufweist, und
    einen pH-Wert zwischen 8 und 12, bevorzugt zwischen 9 und 11 hat,
    **dadurch gekennzeichnet, dass**
    die keramischen Partikel einen chemisch oberflächenmodifizierten Böhmit aufweisen.

2.  Zusammensetzung nach Anspruch 1, wobei die Polymerdispersion Methacrylsäureester und optional Acrylsäureester aufweist.

3.  Zusammensetzung nach einem der vorhergehenden Ansprüche, ferner aufweisend zumindest ein rheologisches Additiv, wobei das rheologische Additiv ein Carboxylgruppen haltiges, im alkalischen wasserlösliches, Polymer auf Basis von Arcyl- und Methacrylsäureestern aufweist, oder einen hydroxilierten Celluloseether enthält.

4.  Beschichtete weichmagnetische Legierung, wobei die Beschichtung eine maximale Auftragsdicke in den mit Beschichtung versehenen Oberflächenbereichen von 1 μm bis 15 μm, vorzugsweise 1,5 μm bis 8 μm, und eine Zusammensetzung nach einem der Ansprüche 1 bis 3 aufweist, wobei die weichmagnetische Legierung die Gestalt eines Bandes hat.

5. Beschichtete weichmagnetische Legierung nach Anspruch 4, wobei die weichmagnetische Legierung vollständig mit der Beschichtung abgedeckt ist.

6. Beschichtete weichmagnetische Legierung nach Anspruch 4, wobei 20% bis 80%, vorzugsweise 30% bis 70% der Gesamtoberfläche der weichmagnetischen Legierung frei von der Beschichtung liegen.

7. Beschichtete weichmagnetische Legierung nach Anspruch 6, wobei die maximale Breite der beschichteten Bereiche weniger als 2mm, bevorzugt weniger als 1,2mm, besonders bevorzugt weniger als 0,8mm ist.

8. Beschichtete weichmagnetische Legierung nach einem der Ansprüche 4 bis 7, wobei die weichmagnetische Legierung einer der Gruppe bestehend aus Eisenlegierungen mit mindestens 99,5 Gew. % Fe und erschmelzungsbedingten Verunreinigungen, FeSi-Legierungen mit bis zu 5 Gew.-% Si, NiFe-Legierungen mit 30 bis 82 Gew.-% Ni, und FeCo-Legierungen mit einem Co-Gehalt zwischen 4 Gew.-% und 50 Gew.-% aufweist.

9. Verfahren zum Herstellen einer beschichteten weichmagnetischen Legierung, aufweisend:

Bereitstellen einer weichmagnetischen Legierung,
Beschichten der weichmagnetischen Legierung mit einer wasserbasierten alkalischen Zusammensetzung nach einem der Ansprüche 1 bis 3,
Wärmebehandeln der beschichteten weichmagnetischen Legierung, wobei die Beschichtung eine Isolationsschicht aus keramischen Partikeln bildet, die als Glühseparator fungiert.

10. Verfahren nach Anspruch 9, wobei die weichmagnetische Legierung durch Aufbringen einer Struktur beschichtet wird, wobei die Struktur durch ein Muster aus Streifen oder Punkten oder einem Netz gebildet wird wobei zwischen 20% bis 80%, vorzugsweise zwischen 30% bis 70% der Gesamtoberfläche der weichmagnetischen Legierung frei von der Beschichtung bleibt und die Beschichtung mit Hilfe von Profilwalzen auf die weichmagnetische Legierung aufgebracht wird.

11. Verfahren nach Anspruch 9 oder Anspruch 10, wobei die weichmagnetische Legierung die Form eines Bands aufweist, so dass die beschichtete weichmagnetische Legierung die Form eines beschichteten Bandes aufweist,

wobei mehrere einzelne beschichtete Bleche aus dem beschichteten Band mittels Schneiden, Stanzen oder Laserschneiden geformt werden,
wobei die Bleche zu einem Stapel gestapelt werden und der Stapel wärmebehandelt wird, oder
die Bleche zu einem Blechpaket verbunden werden und das Blechpaket wärmebehandelt wird.

12. Verfahren nach einem der Ansprüche 9 bis 11, wobei die weichmagnetische Legierung bei einer Temperatur oberhalb 650°C wärmebehandelt wird.

13. Verfahren nach einem der Ansprüche 9 bis 12, wobei die weichmagnetische Legierung eine Zusammensetzung, die im Wesentlichen aus

$$5 \text{ Gew.-\%} \quad \leq Co \quad \leq 25 \text{ Gew.-\%}$$

$$0{,}3 \text{ Gew.-\%} \quad \leq V \quad \leq 5{,}0 \text{ Gew.-\%}$$

$$0 \text{ Gew.-\%} \quad \leq Cr \quad \leq 3{,}0 \text{ Gew.-\%}$$

$$0 \text{ Gew.-\%} \quad \leq Si \quad \leq 3{,}0 \text{ Gew.-\%}$$

$$0 \text{ Gew.-\%} \quad \leq Mn \quad \leq 3{,}0 \text{ Gew.-\%}$$

$$0 \text{ Gew.-\%} \quad \leq Al \quad \leq 3{,}0 \text{ Gew.-\%}$$

$$0 \text{ Gew.-\%} \quad \leq Ta \quad \leq 0{,}5 \text{ Gew.-\%}$$

$$0 \text{ Gew.-\%} \quad \leq Ni \quad \leq 0{,}5 \text{ Gew.-\%}$$

$$0 \text{ Gew.-\%} \quad \leq Mo \quad \leq 0{,}5 \text{ Gew.-\%}$$

$$0 \text{ Gew.-\%} \quad \leq Cu \quad \leq 0{,}2 \text{ Gew.-\%}$$

$$0 \text{ Gew.-\%} \quad \leq Nb \quad \leq 0{,}25 \text{ Gew.-\%}$$

$$0 \text{ Gew.-\%} \quad \leq Ti \quad \leq 0{,}05 \text{ Gew.-\%}$$

$$0 \text{ Gew.-\%} \quad \leq Ce \quad \leq 0{,}05 \text{ Gew.-\%}$$

$$0 \text{ Gew.-\%} \quad \leq Ca \quad \leq 0{,}05 \text{ Gew.-\%}$$

$$0 \text{ Gew.-\%} \quad \leq Mg \quad \leq 0{,}05 \text{ Gew.-\%}$$

$$0 \text{ Gew.-\%} \quad \leq C \quad \leq 0{,}02 \text{ Gew.-\%}$$

$$0 \text{ Gew.-\%} \quad \leq Zr \quad \leq 0{,}1 \text{ Gew.-\%}$$

$$0 \text{ Gew.-\%} \quad \leq O \quad \leq 0{,}025 \text{ Gew.-\%}$$

$$0 \text{ Gew.-\%} \quad \leq S \quad \leq 0{,}015 \text{ Gew.-\%}$$

Rest Eisen, wobei Cr+Si+Al+Mn $\leq$ 3,0 Gew.-%, und bis zu 0,2 Gew.-% an anderen schmelzbedingten Verunreinigungen, besteht,

wobei die weichmagnetische Legierung einen Phasenübergang von einem BCC-Phasengebiet in ein BCC/FCC-Mischgebiet zu einem FCC-Phasengebiet aufweist, wobei bei aufsteigender Temperatur der Phasenübergang zwischen dem BCC-Phasengebiet und dem BCC/FCC-Mischgebiet bei einer ersten Übergangstemperatur $T_{\alpha/\alpha+\gamma}$ und bei weiter ansteigender Temperatur der Übergang zwischen dem BCC/FCC-Mischgebiet und dem FCC-Phasengebiet bei einer zweiten Übergangstemperatur $T_{\alpha+\gamma/\gamma}$ stattfindet, wobei $T_{\alpha+\gamma/\gamma} > T_{\alpha/\alpha+\gamma}$ und die Differenz $T_{\alpha+\gamma/\gamma} - T_{\alpha/\alpha+\gamma}$ geringer als 45K ist, vorzugsweise geringer als 25K, und
das Wärmebehandeln:

Aufheizen der weichmagnetischen Legierung und danach
Wärmebehandeln der weichmagnetischen Legierung in einer ersten Stufe mit einer Gesamtzeitdauer $t_1$, wobei in der ersten Stufe die weichmagnetische Legierung bei einer Temperatur in einem Temperaturbereich zwischen $T_{\alpha+\gamma/\gamma}$ und $T_1$ wärmebehandelt wird, und danach Abkühlen der weichmagnetischen Legierung bis Raumtemperatur aufweist,
oder
Aufheizen der weichmagnetischen Legierung und danach
Wärmebehandeln der weichmagnetischen Legierung in einer ersten Stufe mit einer Gesamtzeitdauer $t_1$, wobei in der ersten Stufe die weichmagnetische Legierung bei einer Temperatur im Temperaturbereich zwischen $T_{\alpha+\gamma/\gamma}$ und $T_1$ wärmebehandelt wird und danach
Abkühlen der weichmagnetischen Legierung auf eine Temperatur $T_2$, und danach
Wärmebehandeln der weichmagnetischen Legierung in einer zweiten Stufe bei der Temperatur $T_2$ für eine Zeitdauer $t_2$, und danach
Abkühlen der weichmagnetischen Legierung auf Raumtemperatur aufweist,

wobei die Wärmebehandlung zumindest zeitweise in einer wasserstoffhaltigen Atmosphäre durchgeführt wird, währenddessen die freiliegenden Teile der Oberfläche des Vorprodukts in direktem Kontakt mit der wasserstoffhaltigen Atmosphäre stehen, wobei $T_1 > T_2$ ist, $T_1$ oberhalb $T_{\alpha+\gamma/\gamma}$ und $T_2$ unterhalb $T_{\alpha/\alpha+\gamma}$ liegt.

**Claims**

1. A water-based alkaline composition for forming an insulation layer of an annealing separator on a soft magnetic alloy, comprising:

   ceramic particles having an average particle size of 10 nm to 90 nm,
   at least one polymer dispersion as a binding agent, wherein the polymer dispersion comprises one or more or copolymers of the group consisting of acrylate polymers, methacrylate polymers, polyvinyl acetate, polystyrene, polyurethane, polyvinyl alcohol, hydroxylated cellulose ethers, polyvinylpyrrolidon, and polyvinyl butyral, and has a pH value between 8 and 12, preferably between 9 and 11,
   **characterised in that**
   the ceramic particles comprise a chemically surface-modified boehmite.

2. The composition according to claim 1, wherein the polymer dispersion comprises methacrylic ester and optionally acrylic ester.

3. The composition according one of the preceding claims, further comprising at least one rheological additive, wherein the rheological additive contains an alkaline water-soluble polymer containing carboxyl groups and based on acrylic and methacrylic esters, or contains a hydroxylated cellulose ether.

4. A coated soft magnetic alloy, wherein the coating has a maximum application thickness in the surface areas provided with the coating of 1 $\mu$m to 15 $\mu$m, preferably 1.5 $\mu$m to 8 $\mu$m, and a composition according to one of claims 1 to 3, wherein the soft magnetic alloy has the shape of a ribbon.

5. The coated soft magnetic alloy according to claim 4, wherein the soft magnetic alloy is completely covered by the coating.

6. The coated soft magnetic alloy of claim 4, wherein 20% to 80%, preferably 30% to 70% of the total surface of the soft magnetic alloy are exposed by the coating.

7. The coated soft magnetic alloy according to claim 6, wherein the maximum width of the coated areas is less than 2 mm, preferably less than 1.2 mm, more preferably less than 0.8 mm.

8. The coated soft magnetic alloy according to one of claims 4 to 7, wherein the soft magnetic alloy comprises one of the group consisting of iron alloys with at least 99.5% by weight Fe and impurities due to melting, FeSi alloys with up to 5% by weight Si, NiFe alloys with 30 to 82% by weight Ni, and FeCo alloys with a Co content between 4% by weight and 50% by weight.

9. A method of producing a coated soft magnetic alloy, comprising:

   providing a soft magnetic alloy,
   coating the soft magnetic alloy with a water-based alkaline composition according to one of claims 1 to 3,
   heat treating the coated soft magnetic alloy, wherein the coating forms an insulation layer of ceramic particles functioning as an annealing separator.

10. The method according to claim 9, wherein the soft magnetic alloy is coated by applying a structure, wherein the structure is formed by a pattern of stripes or dots or a mesh, wherein between 20% to 80%, preferably between 30% to 70% of the total surface of the soft magnetic alloy remains free from the coating and the coating is applied to the soft magnetic alloy using shape rollers.

11. The method according to claim 9 or claim 10, wherein the soft magnetic alloy has the shape of a ribbon so that the coated soft magnetic alloy has the shape of a coated ribbon,

wherein multiple separate coated sheets are formed from the coated ribbon by means of cutting, die cutting or laser cutting,
wherein the sheets are stacked into a stack and the stack is heat treated, or
the sheets are joined into a sheet pack and the sheet pack is heat treated.

12. The method according to one of claims 9 to 11, wherein the soft magnetic alloy is heat treated at a temperature greater than 650 °C.

13. The method according to one of claims 9 to 12, wherein the soft magnetic alloy has a composition consisting substantially of

$$5\% \text{ by weight} \leq Co \leq 25\% \text{ by weight}$$

$$0.3\% \text{ by weight} \leq V \leq 5.0\% \text{ by weight}$$

$$0\% \text{ by weight} \leq Cr \leq 3.0\% \text{ by weight}$$

$$0\% \text{ by weight} \leq Si \leq 3.0\% \text{ by weight}$$

$$0\% \text{ by weight} \leq Mn \leq 3.0\% \text{ by weight}$$

$$0\% \text{ by weight} \leq Al \leq 3.0\% \text{ by weight}$$

$$0\% \text{ by weight} \leq Ta \leq 0.5\% \text{ by weight}$$

$$0\% \text{ by weight} \leq Ni \leq 0.5\% \text{ by weight}$$

$$0\% \text{ by weight} \leq Mo \leq 0.5\% \text{ by weight}$$

$$0\% \text{ by weight} \leq Cu \leq 0.2\% \text{ by weight}$$

$$0\% \text{ by weight} \leq Nb \leq 0.25\% \text{ by weight}$$

$$0\% \text{ by weight} \leq Ti \leq 0.05\% \text{ by weight}$$

$$0\% \text{ by weight} \leq Ce \leq 0.05\% \text{ by weight}$$

$$0\% \text{ by weight} \leq Ca \leq 0.05\% \text{ by weight}$$

$$0\% \text{ by weight} \leq Mg \leq 0.05\% \text{ by weight}$$

$$0\% \text{ by weight} \leq C \leq 0.02\% \text{ by weight}$$

$$0\% \text{ by weight} \leq Zr \leq 0.1\% \text{ by weight}$$

$$0\% \text{ by weight} \leq O \leq 0.025\% \text{ by weight}$$

$$0\% \text{ by weight} \leq S \leq 0.015\% \text{ by weight,}$$

the remainder iron, wherein Cr+Si+Al+Mn $\leq$ 3.0% by weight and up to 0.2% by weight other impurities due to melting,

wherein the soft magnetic alloy has a phase transition from a BCC phase region to a BCC/FCC mixed region to an FCC phase region, wherein, with increasing temperature, the phase transition between the BCC phase region and the BCC/FCC mixed region occurs at a first transition temperature $T_{\alpha/\alpha+\gamma}$ and, with further increasing temperature, the transition between the BCC/FCC mixed region and the FCC phase region occurs at a second transition temperature $T_{\alpha+\gamma/\gamma}$, wherein $T_{\alpha+\gamma/\gamma} > T_{\alpha/\alpha+\gamma}$ and the difference $T_{\alpha+\gamma/\gamma} - T_{\alpha/\alpha+\gamma}$ is less than 45 K, preferably less than 25 K, and
wherein the heat treatment comprises:

heating the soft magnetic alloy, and subsequently
heat treating the soft magnetic alloy in a first stage with a total duration $t_1$, wherein, in the first stage, the soft magnetic alloy is heat treated at a temperature in a temperature range between $T_{\alpha+\gamma/\gamma}$ and $T_1$, and subsequently cooling the soft magnetic alloy to room temperature, or
heating the soft magnetic alloy, and subsequently
heat treating the soft magnetic alloy in a first stage with a total duration $t_1$, wherein, in the first stage, the soft magnetic alloy is heat treated at a temperature in a temperature range between $T_{\alpha+\gamma/\gamma}$ and $T_1$, and subsequently
cooling the soft magnetic alloy to a temperature $T_2$, and subsequently
heat treating the soft magnetic alloy in a second stage at the temperature $T_2$ for a duration $t_2$, and subsequently
cooling the soft magnetic temperature to room temperature,
wherein, at least for a time, the heat treatment is performed in a hydrogen containing atmosphere while the exposed portions of the surface of the preliminary product are in direct contact with the hydrogen containing atmosphere, wherein $T_1 > T_2$, $T_1$ is greater than $T_{\alpha+\gamma/\gamma}$ and $T_2$ is less than $T_{\alpha/\alpha+\gamma}$.

**Revendications**

1. Composition alcaline à base d'eau servant à former une couche d'isolation d'un séparateur de recuit sur un alliage magnétique doux, comprenant :

des particules de céramique dont la taille moyenne de particule est comprise entre 10 nm et 90 nm,
au moins une dispersion polymère comme liant, dans laquelle la dispersion polymère comprend un ou plusieurs copolymères ou polymérisat mélangé du groupe constitué par les polymères acryliques, les polymères méthacryliques, le poly(acétate de vinyle), le polystyrène, le polyuréthane, le poly(alcool vinylique), les éthers hydroxylés de cellulose, le poly(vinyl pyrrolidone) et le polyvinylbutyral, et
un pH compris entre 8 et 12, de préférence entre 9 et 1, **caractérisé en ce que** les particules de céramique présentent une bœhmite chimiquement modifiée en surface.

2. Composition selon la revendication 1, dans laquelle la dispersion polymère contient des esters d'acide méthacrylique et éventuellement des esters d'acide acrylique.

3. Composition selon l'une quelconque des revendications précédentes, comprenant en outre un additif rhéologique, l'additif rhéologique contenant un polymère soluble dans l'eau alcaline, contenant des groupes carboxyle, à base d'esters d'acide acrylique et méthacrylique, ou un éther de cellulose hydroxylé.

4. Alliage magnétique doux revêtu, dans lequel le revêtement présente une épaisseur de couche maximale dans les zones de surface pourvues de revêtement comprise entre 1 μm et 15 μm, de préférence entre 1,5 μm et 8 μm, et une composition selon l'une quelconque des revendications 1 à 3, l'alliage magnétique doux se présentant sous la forme d'une bande.

5. Alliage magnétique doux revêtu selon la revendication 4, l'alliage magnétique doux revêtu étant entièrement recouvert par le revêtement.

6. Alliage magnétique doux revêtu selon la revendication 4, dans lequel 20 % à 80 %, de préférence 30 % à 70 % de la surface totale de l'alliage magnétique doux sont exempts de revêtement.

7. Alliage magnétique doux revêtu selon la revendication 6, dans lequel la largeur maximale des zones revêtues est inférieure à 2 mm, de préférence inférieure à 1,2 mm, et de préférence encore inférieure à 0,8 mm.

8. Alliage magnétique doux revêtu selon l'une quelconque des revendications 4 à 7, l'alliage magnétique doux appartenant au groupe constitué d'alliages de fer contenant au moins 99,5 % en poids de Fe et d'impuretés dues à la fusion, des alliages Fe-Si contenant jusqu'à 5 % en poids de Si, des alliages Ni-Fe contenant 30 à 82 % en poids de Ni et des alliages Fe-Co contenant entre 4 % et 50 % en poids de Co.

9. Procédé de fabrication d'un alliage magnétique doux revêtu, consistant à :

préparer un alliage magnétique doux,
recouvrir l'alliage magnétique doux d'une composition alcaline à base d'au selon l'une quelconque des revendications 1 à 3,
traiter thermiquement l'alliage magnétique doux revêtu, le revêtement formant une couche d'isolation composée de particules de céramique, qui font office de séparateur de recuit.

10. Procédé selon la revendication 9, dans lequel l'alliage magnétique doux est recouvert d'une structure, ladite structure étant formée par un motif constitué de rayures, de points ou de maillage, entre 20 % et 80 %, de préférence entre 30 % et 70 % de la surface totale de l'alliage magnétique doux demeurant exempte de revêtement et le revêtement est appliqué à l'aide de rouleaux profilés sur l'alliage magnétique doux.

11. Procédé selon la revendication 9 ou la revendication 10, dans lequel l'alliage magnétique doux se présente sous forme de bande, de sorte que l'alliage magnétique doux revêtu se présente sous forme de bande revêtue, dans lequel plusieurs tôles revêtues séparées sont formées à partir de la bande revêtue par découpe, poinçonnage ou découpe au laser, dans lequel les tôles sont empilées et l'empilement est traité thermiquement, ou les tôles sont assemblées en un paquet de tôles et le paquet de tôles est traité thermiquement.

12. Procédé selon l'une quelconque des revendications 9 à 11, dans lequel l'alliage magnétique doux est traité thermiquement à une température supérieure à 650 °C.

13. Procédé selon l'une quelconque des revendications 9 à 12, dans lequel l'alliage magnétique doux a une composition constituée essentiellement de

$$5 \text{ \% en poids} \leq Co \leq 25 \text{ \% en poids}$$

$$0,3 \text{ \% en poids} \leq V \leq 5,0 \text{ \% en poids}$$

$$0 \text{ \% en poids} \leq Cr \leq 3,0 \text{ \% en poids}$$

$$0 \text{ \% en poids} \leq Si \leq 3,0 \text{ \% en poids}$$

$$0 \text{ \% en poids} \leq Mn \leq 3,0 \text{ \% en poids}$$

$$0 \text{ \% en poids} \leq Al \leq 3,0 \text{ \% en poids}$$

$$0 \text{ \% en poids} \leq Ta \leq 0,5 \text{ \% en poids}$$

$$0 \text{ \% en poids} \leq Ni \leq 0{,}5 \text{ \% en poids}$$

$$0 \text{ \% en poids} \leq Mo \leq 0{,}5 \text{ \% en poids}$$

$$0 \text{ \% en poids} \leq Cu \leq 0{,}2 \text{ \% en poids}$$

$$0 \text{ \% en poids} \leq Nb \leq 0{,}25 \text{ \% en poids}$$

$$0 \text{ \% en poids} \leq Ti \leq 0{,}05 \text{ \% en poids}$$

$$0 \text{ \% en poids} \leq Ce \leq 0{,}05 \text{ \% en poids}$$

$$0 \text{ \% en poids} \leq Ca \leq 0{,}05 \text{ \% en poids}$$

$$0 \text{ \% en poids} \leq Mg \leq 0{,}05 \text{ \% en poids}$$

$$0 \text{ \% en poids} \leq C \leq 0{,}02 \text{ \% en poids}$$

$$0 \text{ \% en poids} \leq Zr \leq 0{,}1 \text{ \% en poids}$$

$$0 \text{ \% en poids} \leq O \leq 0{,}025 \text{ \% en poids}$$

$$0 \text{ \% en poids} \leq S \leq 0{,}015 \text{ \% en poids}$$

le reste étant constitué de fer, avec Cr+Si+Al+Mn ≤ 3,0 % en poids, et jusqu'à 0,2 % en poids d'autres impuretés liées à la fusion,

dans lequel l'alliage magnétique doux présente une transition de phase d'une zone de phase BCC à une zone mixte BCC/FCC, puis à une zone de phase FCC, dans lequel la transition de phase entre la zone de phase BCC et la zone mixte BCC/FCC a lieu à une première température de transition $T_{\alpha/\alpha+\gamma}$ lorsque la température augmente, et la transition entre la zone mixte BCC/FCC et la zone de phase FCC a lieu à une deuxième température de transition $T_{\alpha+\gamma/\gamma}$ lorsque la température continue d'augmenter, $T_{\alpha+\gamma/\gamma} > T_{\alpha/\alpha+\gamma}$ et la différence $T_{\alpha'\gamma/\gamma}$ - $T_{\alpha/\alpha+\gamma}$ est inférieure à 45 K, de préférence inférieure à 25 K, et
le traitement thermique comprend :

le chauffage de l'alliage magnétique doux, puis
le traitement thermique de l'alliage magnétique doux dans une première étape pendant une durée totale $t_1$, dans lequel dans la première étape, l'alliage magnétique doux est traité thermiquement à une température comprise entre $T_{\alpha/\alpha+\gamma}$ et $T_1$, puis le refroidissement de l'alliage magnétique doux à température ambiante, ou
le chauffage de l'alliage magnétique doux, puis
le traitement thermique de l'alliage magnétique doux dans une première étape d'une durée totale $t_1$, dans lequel l'alliage magnétique doux est traité thermiquement dans la première étape à une température comprise dans la plage de températures entre $T_{\alpha+\gamma/\gamma}$ et $T_1$, puis
le refroidissement de l'alliage magnétique doux à une température $T_2$, puis
le traitement thermique de l'alliage magnétique doux dans une deuxième étape à la température $T_2$ pendant une durée $t_2$, puis
le refroidissement de l'alliage magnétique doux à température ambiante,

dans lequel le traitement thermique est effectué au moins temporairement dans une atmosphère contenant de l'hydrogène, pendant lequel les parties exposées de la surface du demi-produit sont en contact direct avec l'atmosphère contenant de l'hydrogène, $T_1 > T_2$, $T_1$ étant supérieur à $T_{\alpha+\gamma/\gamma}$ $T_2$ étant inférieur à $T_{\alpha/\alpha+\gamma}$.

Fig. 1

Fig. 2

Fig. 3

EP 4 020 507 B1

Fig. 4

Fig. 5

29

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1482072 A2
- DE 2247269 A1
- EP 3396681 A1
- DE 102008039326 A1
- EP 3000915 A1

- EP 1482072 A
- US 20160329139 A1
- DE 102014100589 A1
- DE 1029845
- US 20180336982 A1